# EUROPEAN PATENT SPECIFICATION

(11) **EP 2 559 667 B1**
(45) Date of publication and mention of the grant of the patent: **08.08.2018**
(21) Application number: 11759612.2
(22) Date of filing: 25.03.2011
(51) Int. Cl.: B01D 61/02, C02F 1/20, C02F 1/44, C02F 1/52, C02F 1/58, C02F 1/66, C02F 1/70, C02F 1/72, C02F 3/12, C02F 3/28, C02F 3/30, C02F 9/00, C02F 101/10, C02F 101/14, C02F 101/16, C02F 101/18, C02F 101/30, C02F 103/18

(54) **METHOD AND SYSTEM FOR THE TREATMENT OF WASTEWATER CONTAINING PERSISTENT SUBSTANCES**
VERFAHREN UND VORRICHTUNG ZUR BEARBEITUNG FÜR ABWÄSSER MIT SCHWER ABBAUBAREN SUBSTANZEN
PROCÉDÉ ET SYSTÈME DE TRAITEMENT D'EAUX USÉES CONTENANT DES MATIÈRES PERSISTANTES

(30) Priority: 05.10.2010 JP 2010226082; 05.10.2010 JP 2010226072; 26.03.2010 JP 2010073412
(43) Date of publication of application: 20.02.2013
(73) Proprietor: Chiyoda Corporation, Kanagawa 230-8601 (JP)
(72) Inventor: KAWAMURA, Kazushige, Yokohama-shi Kanagawa 230-8601 (JP); OGI, Satoshi, Yokohama-shi Kanagawa 230-8601 (JP); SHINOHARA, Masayo, Yokohama-shi Kanagawa 230-8601 (JP)
(74) Representative: Appelt, Christian W.
(86) International application number: PCT/JP2011/057451
(87) International publication number: WO 2011/118808

(56) References cited:
- DE-A1- 4 014 023
- GB-A- 1 591 274
- JP-A- 4 277 074
- JP-A- S5 197 247
- JP-A- 10 118 664
- JP-A- 52 003 264
- JP-A- 2009 254 959
- US-A- 4 323 430
- US-A- 4 481 112
- US-A- 5 236 557

## Description

### TECHNICAL FIELD

The present invention relates to a method for treating gasification plant wastewater. Particularly, the present invention relates to a method for treating gasification plant wastewater containing two or more persistent substances such as thiocyanates, cyanides, polythionates, and organic substances.

### BACKGROUND ART

So-called gasification gas obtained by partial oxidation of fossil fuel such as petroleum fuel (including heavy oil and asphalt) or coal fuel (including coal tar) contains impurities such as dust and sulfur compounds, and therefore the gasification gas needs to be processed through a wet refining process or a dry refining process. It is known that when gasification gas is refined by a wet process, for example, wet-cleaning wastewater (also referred to as "gasification plant wastewater") discharged from a wet-cleaning unit contains COD components typified by thiocyanates (SCN), cyanides (CN), polythionates including thiosulfates (S₂O₃), and organic substances including organic acids, and further contains ammonia and solid matter (Non-Patent Literatures 1 and 2). Further, the wet-cleaning wastewater sometimes contains substances contained in coal such as selenium (Se) and fluorine (F).

These substances that need to be removed are present in various forms in the wastewater. For example, cyanides are present as free ions or metal-cyano complexes. Thiocyanates and thiosulfates are also present as free ions or metal complexes. Similarly to formic acid, acetic acid, and alcohols, all of them are substances difficult to decompose into harmless components. Further, selenium is present in a zerovalent, tetravalent, or hexavalent state, and part of fluorine reacts with boron to form fluoroboric acid that is difficult to treat.

As described above, COD components such as thiocyanates, cyanides, polythionates, and organic substances are substances difficult to decompose into harmless components, that is, persistent substances. Therefore, these substances cannot be satisfactorily and stably decomposed only by conventional wastewater treatment such as catalytic wet oxidation treatment, biological treatment, or treatment using an oxidizing agent such as hypochlorous acid to reduce COD to a level equal to or lower than its limit. Under the circumstances, various treatment methods such as advanced oxidation methods and catalytic oxidation methods have been proposed.

For example, Patent Literature 1 discloses a technique in which wastewater containing persistent substances is heated to a high temperature under high pressure, and then a sulfate radical source such as sodium persulfate is added to and quickly mixed with the wastewater under stirring to generate sulfate radicals to oxidatively decompose the persistent substances. Patent Literature 2 discloses a method in which an oxidizing agent such as sodium hypochlorite, hydrogen peroxide, or ozone is added to wastewater containing persistent substances such as thiosulfate ions, and then the wastewater is irradiated with ultraviolet light to decompose the persistent substances. Patent Literature 3 discloses a technique in which wastewater containing persistent substances is irradiated with ultraviolet light in the presence of an oxidizing agent such as hydrogen peroxide, oxygen gas, or air.

As a method for removing selenium, a coagulative precipitation method has been proposed, in which, as disclosed in Patent Literature 4, hexavalent selenium is reduced to tetravalent selenium by using an iron material or dissolved Fe²⁺ as a reducing agent, and is then removed together with iron hydroxide by coagulative precipitation.

As described above, fluorine is present mainly as fluoroboric acid. Therefore, as a method for removing fluorine, a coagulative precipitation method has been proposed, in which, as disclosed in Patent Literature 5, fluoroboric acid is first decomposed by adding an aluminum compound to wastewater, and then the wastewater is adjusted to a pH near neutral by adding an alkaline agent so that fluorine is removed together with aluminum hydroxide by coagulative precipitation.

Patent Literature 6 discloses a technique in which a ferrous salt or a ferric salt is added to wastewater whose cyanide concentration fluctuates to convert some of cyanides into poorly-soluble iron-cyano complexes, and then the unreacted cyanides and organic substances contained in the wastewater are decomposed and removed by microorganisms.

Patent Literature 7 and Patent Literature 8 disclose methods for treating wastewater obtained during the gasification of fossil fuels.

### CITATION LIST

### PATENT LITERATURE

Patent Literature 1: Japanese Patent Application Laid-Open (JP-A) No. 2006-314880
Patent Literature 2: Japanese Patent Application Laid-Open (JP-A) No. 2005-224771
Patent Literature 3: Japanese Patent Application Laid-Open (JP-A) No. 2004-024995
Patent Literature 4: Japanese Patent Application Laid-Open (JP-A) No. 9-187778
Patent Literature 5: Japanese Patent Application Laid-Open (JP-A) No. 63-039694
Patent Literature 6: Japanese Patent Application Laid-Open (JP-A) No. 10-118664
Patent Literature 7: US5236557
Patent Literature 8: US4323430

### NON-PATENT LITERATURE

Non-Patent Literature 1: "II-3 Syn-Gas from Fossil Fuel", The Thermal and Nuclear Power, Vol. 50, No. 10
Non-Patent Literature 2: "Decomposition of Sodium Thiosulfate and Sodium Thiocyanate in Supercritical Water", The Japan Institute of Energy, Vol. 85, No. 2, 2006

### SUMMARY OF INVENTION

### TECHNICAL PROBLEM

However, the treatment method disclosed in Patent Literature 1 is not suitable from the viewpoint of treatment cost because wastewater discharged by wet cleaning in large amounts needs to be maintained at a high temperature under high pressure during treatment. The treatment methods disclosed in Patent Literatures 2 and 3 involve UV irradiation in the presence of an oxidizing agent and therefore have a problem that the efficiency of UV irradiation is lowered depending on the solid content or degree of coloration of wet-cleaning wastewater.

When wet-cleaning wastewater contains selenium or fluorine, as described in Patent Literatures 4 and 5, it is difficult to meet effluent standards only by a commonly-used wastewater treatment technique such as biological treatment, coagulative precipitation, sand filtration, or activated carbon adsorption.

In technique disclosed in Patent Literature 6, it is necessary to inject a large amount of an iron compound to generate poorly-soluble iron-cyano complexes. As a result, almost all the injected iron compound is precipitated as iron hydroxide so that sludge is produced by solid-liquid separation, which causes a problem that the sludge containing cyanides needs to be disposed of.

As described above, all of these conventional techniques for treating wet-cleaning wastewater have some kind of problem with, for example, treatment cost or treatment efficiency, and are therefore not acceptable from the viewpoint of practical use. In view of the circumstances, it is an object of the present invention to provide a treatment method and a treatment system which are capable of inexpensively and efficiently treating wastewater discharged from a gasification plant in large amounts and containing two or more persistent substances typified by thiocyanates, cyanides, polythionates including thiosulfates, and organic substances including organic acids.

### Solution to Problem

In order to achieve the above object, the present invention is directed to a method for treating wastewater discharged by wet-cleaning of gas obtained by partial oxidation of fossil fuel according to claim 1, and a system according to claim 13.

### ADVANTAGEOUS EFFECTS OF INVENTION

According to the present invention, it is possible to inexpensively and efficiently treat wastewater discharged from a gasification plant in large amounts and containing any two or more persistent substances selected from thiocyanates, cyanides, polythionates including thiosulfates, and organic substances including organic acids and aromatics.

### BRIEF DESCRIPTION OF DRAWINGS

Fig. 1 is a schematic flow chart showing a specific example of a wastewater treatment method according to the present invention.
Fig. 2 is a schematic flow chart showing a specific example of the specific method of treatment using an advanced oxidation means 41 shown in Fig. 1.
Fig. 3 is a schematic flow chart showing another specific example of the specific method of treatment using the advanced oxidation means 41 shown in Fig. 1.
Fig. 4 is a schematic flow chart showing another specific example of the selenium-fluorine removal step 6 shown in Fig. 1.
Fig. 5 is a schematic flow chart showing another specific example of the selenium-fluorine removal step 6 shown in Fig. 1 together with a reverse osmosis membrane treatment step 7.

### DESCRIPTION OF EMBODIMENTS

A method for treating wastewater according to the present invention is intended to treat gasification plant wastewater that is discharged when gasification gas obtained by partial oxidation of fossil fuel is subject to wet-cleaning. Such gasification plant wastewater contains, as COD components, persistent substances such as thiocyanates, cyanides, polythionates including thiosulfates, organic substances including organic acids and aromatics, and ammonia.

In order to remove such two or more persistent substances, the method for treating gasification plant wastewater according to the present invention includes: a free cyanide removal step in which free cyanides contained in the wastewater are removed by acidifying and aerating the wastewater; a biological treatment step in which the wastewater that has been treated in the free cyanide removal step is biologically treated; and a decomposition treatment step in which COD components contained in the wastewater that has been treated in the biological treatment step are decomposed.

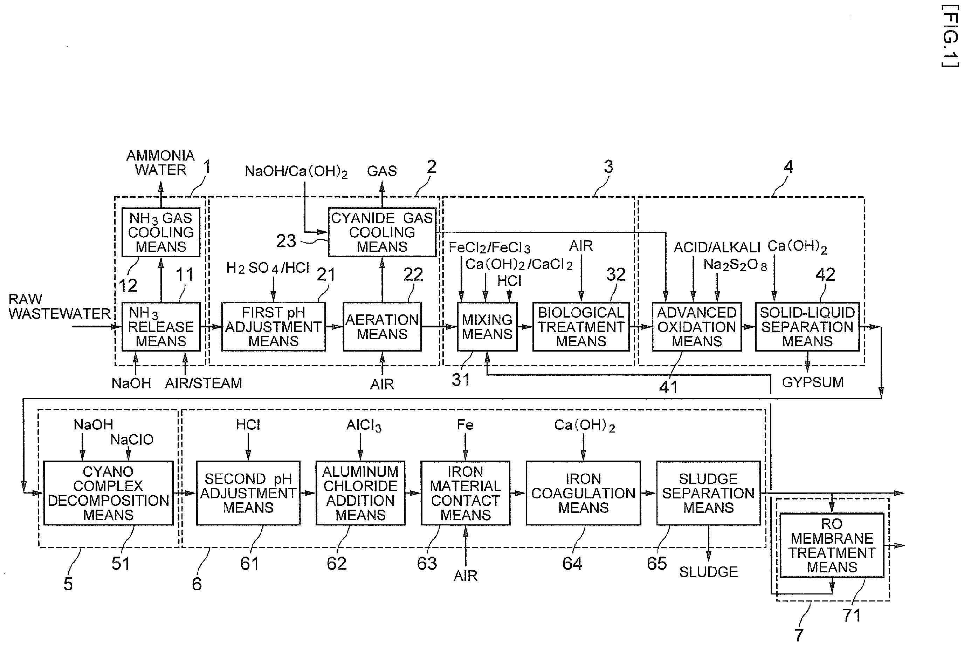

Hereinbelow, one specific example of the wastewater treatment method according to the present invention will be described with reference to Fig. 1. As shown in Fig. 1, the specific example of the wastewater treatment method includes an NH₃ removal step 1, a free cyanide removal step 2, a biological treatment step 3, a decomposition treatment step 4, a residual cyano complex removal step 5, a selenium-fluorine removal step 6, and a reverse osmosis membrane treatment step 7.

The NH₃ removal step 1 is directed to remove NH₃ contained in gasification plant wastewater (hereinafter, sometimes simply referred to as "wastewater") to some extent. By performing the NH₃ removal step 1 prior to the biological treatment step 3, it is possible to reduce the load on the biological treatment step 3 even when raw wastewater contains a high level of NH₃. This is because when a high level of NH₃ is removed by biological treatment (anaerobic or aerobic treatment), treatment cost is increased due to the necessity of alcohol addition or the like, and in addition, the size of a treatment tank is also increased. The NH₃ removal step 1 may be performed between the free cyanide removal step 2 and the biological treatment step 3.

When raw wastewater does not contain a high level of NH₃, it is not particularly necessary to perform the NH₃ removal step 1 prior to the biological treatment step 3 (anaerobic or aerobic treatment). However, the NH₃ removal step 1 sometimes needs to be performed to meet effluent limits for nitrogen. In this case, the NH₃ removal step 1 is preferably performed after the decomposition treatment step 4. An efficient approach to reducing a NH₃ level from high to very low is to, for example, provide a stripping means and a biological treatment means located downstream of the stripping means to perform the NH₃ removal step 1. In the NH₃ removal step 1, NH₃ can be removed by, for example, stripping, catalytic oxidation, biological treatment, membrane treatment, or oxidation using hypochlorous acid.

Fig. 1 shows, as an example, a case where NH₃ stripping is performed by an NH₃ release means 11 and an NH₃ gas cooling means 12. In the NH₃ release means 11, the wastewater is heated to about 90°C or higher by, for example, a heat exchanger using excess steam as a heating medium, the pH of the wastewater is adjusted to 10 or higher by adding an alkaline agent such as NaOH or Ca(OH)₂, and gas such as steam or air is introduced into the wastewater to strip NH₃.

The gas to be introduced into the wastewater is preferably steam because heating of the wastewater can be performed concurrently with NH₃ stripping. NH₃ stripped by the NH₃ release means 11 is sent to the NH₃ gas cooling means 12 such as a heat exchanger and cooled by, for example, a cooling medium, and is then collected in the form of, for example, ammonia water.

The wastewater from which NH₃ has been removed to some extent in the NH₃ removal step 1 is then sent to the free cyanide removal step 2. The free cyanide removal step 2 is performed by a first pH adjustment means 21, an aeration means 22, and a cyanide gas cooling means 23. First, in the first pH adjustment means 21, the wastewater is acidified with sulfuric acid or hydrochloric acid to adjust its pH to 3 to 7, preferably 4 to 6.

If the pH is less than 3, an improvement in the efficiency of release caused by the aeration means 22 cannot be expected, and therefore there is a case where the acid added goes to waste. Further, there is also a case where deterioration of other contained substances (e.g., decomposition of thiosulfates) occurs. Furthermore, release of low-boiling substances other than cyanides contained in the wastewater (e.g., low-boiling organic acids such as formic acid and the like) is increased. In this case, formic acid as well as cyanides bypasses the biological treatment step and is then decomposed together with the cyanides etc. by, for example, advanced oxidation performed after the biological treatment step, which increases the cost of chemical agents and makes it difficult to stably treat the wastewater. On the other hand, if the pH exceeds 7, the partial pressure of cyanide gas is too low, which reduces the efficiency of release caused by the aeration means 22.

The wastewater whose pH has been adjusted is then sent to the aeration means 22 such as an aeration tank and aerated by introducing air thereinto to strip free cyanides contained therein. During the aeration treatment, the temperature of the wastewater is preferably 20°C or higher. Further, the wastewater is preferably aerated for about 0.1 to 2.0 hours by the aeration means 22, and based on this condition, the capacity of the aeration tank is determined. The amount of air to be supplied (introduced) for aeration is preferably about 0.1 to 100 Nm³/hr per cubic meters of the wastewater.

The aeration means 22 is not limited to the above-described aeration tank. For example, the wastewater may be circulated in a packed tower equipped with a liquid circulation system while being aerated by introducing air from the bottom side of the tower to extract stripped cyanides from the upper side of the tower. Further, steam may be introduced instead of or in combination with air.

By performing such aeration treatment, cyanides and compounds thereof that are disadvantageous for downstream biological treatment, that is, that inhibit the growth of living organisms are stripped. More specifically, hydrogen cyanide, a cyanide ion, cyanic acid and its ion, and some of cyano complexes with zinc, cadmium, and the like are stripped. Iron-cyano complexes are hardly removed by this aeration treatment, but this causes few problems because iron-cyano complexes have very little adverse effect on the growth of living organisms. The above-described aeration treatment uses air as aeration gas, but a non-aqueous gas other than air may be used. Further, steam may be introduced to strip cyanide gas at high temperature.

The free cyanides removed by the aeration means 22 are sent to the cyanide gas cooling means 23 and absorbed by an alkaline solution containing an alkaline agent such as NaOH or Ca(OH)₂. More specifically, an alkaline solution is circulated in a packed tower equipped with a liquid circulation system having a cooler while the cyanide gas removed by the aeration means 22 is introduced into the packed tower from the bottom side thereof so as to perform gas-liquid contact between the cyanide gas and the alkaline solution.

During the gas-liquid contact, the temperature of the alkaline solution is kept almost constant by the cooler so as not to be 40°C or higher, and therefore the cyanide gas is cooled and absorbed by the alkaline solution. The cyanide gas contains substances released together with cyanides (e.g., organic acids, such as formic acid and acetic acid, having a partial pressure in an acidic range and low-boiling alcohols). The alkaline solution that has absorbed these substances and the cyanide gas is sent to the decomposition treatment step 4, and these substances and the cyanide gas are subjected to oxidative decomposition together with other persistent substances. The pH of the alkaline solution is preferably about 7 to 10. If the pH of the alkaline solution is lower than 7, absorption efficiency is lowered. On the other hand, even if the pH of the alkaline solution exceeds 10, absorption efficiency is not improved. In this case, the salt concentration of the alkaline solution is too high, and therefore the efficiency of the decomposition treatment step 4 is lowered or the load on the downstream reverse osmosis membrane treatment step 7 is increased.

It is to be noted that, instead of the alkaline solution, part of a solution used in the decomposition treatment step 4 may be extracted and used in the cyanide gas cooling means 23. The alkaline solution that has absorbed the cyanide gas may be sent to and treated in the residual cyano complex removal step 5. The stripped cyanide gas etc. may be treated by a combustor, which is preferred because the load on downstream wastewater treatment can be reduced. As described above, according to the wastewater treatment method of the present invention, free cyanides bypass the biological treatment step 3. This makes it possible to avoid a problem that free cyanides inhibit biological treatment.

The wastewater that has been treated in the free cyanide removal step 2 is then sent to the biological treatment step 3. A softening step in which calcium, magnesium, and the like contained in the wastewater are removed may be performed prior to the biological treatment step 3 to more efficiently perform biological treatment. The biological treatment step 3 is performed by a mixing means 31 and a biological treatment means 32 to remove organic substances such as organic acids, ammonia, and nitric acid contained in the wastewater. Further, some of residual cyanides are also biologically decomposed.

The mixing means 31 includes, for example, a mixing tank equipped with a stirrer, in which the pH of the wastewater is adjusted to neutral with an acid or an alkali. When the wastewater contains a high level of fluorine, if necessary, calcium sources such as calcium hydroxide and calcium chloride are added, and then calcium chloride is further added to the wastewater received by the mixing tank while the pH of the wastewater is adjusted. They are added in at least an amount adequate to fluorine fixation_(calculated as CaF₂). This makes it possible to fix fluorine contained in the wastewater as calcium fluoride.

In the mixing tank, instead of or in addition to the above-described fluorine fixation, thiocyanates contained in the wastewater may be treated by complexation with divalent iron ions and/or trivalent iron ions by adding ferrous chloride or ferric chloride to the wastewater. The wastewater contained in the mixing tank is preferably maintained at about room temperature. As described above, the mixing means 31 performs pH adjustment and, if necessary, removes fluorine contained in the wastewater and/or treats thiocyanates contained in the wastewater by complexation. This makes it possible to suppress the inhibition of biological treatment caused by fluorine and/or thiocyanates. It is to be noted that even when an iron compound is added, iron-cyano complexes that are difficult to treat are not produced because free cyanides have already been stripped in the previous step.

The biological treatment means 32 is directed to biologically treat organic acids, ammonia, nitric acid, etc. contained in the wastewater by either one or a combination of conventional anaerobic treatment and conventional aerobic treatment or by using a biofilm reactor such as Microza (registered trade mark). In general, cyanides cause growth inhibition in biological treatment at a concentration of about 1 mg/L. However, as described above, the wastewater treatment method according to the present invention does not cause such a problem because cyanides such as free cyanides inhibiting stable biological treatment are previously removed in the free cyanide removal step 2.

On the other hand, fluorine and thiocyanates reduce the decomposition rate in biological treatment depending on their existence form. Therefore, when the concentration of fluorine or thiocyanates contained in raw wastewater is high to some extent, the mixing means 31 is preferably provided to treat fluorine or thiocyanates as described above. When the concentration of fluorine or thiocyanates is not high, neutralization, fluorine fixation, and/or complexation of thiocyanates can be performed in an anaerobic fermentation tank or an aerobic aeration tank used in the biological treatment step 3 without providing a mixing tank as the mixing means 31.

The wastewater that has been treated in the biological treatment step 3 is then sent to the decomposition treatment step 4. The decomposition treatment step 4 is performed by, for example, an advanced oxidation means 41 and a solid-liquid separation means 42 to remove thiocyanates (SCN), thiosulfates (S₂O₃), and cyanides (CN) that are persistent substances contained in the wastewater. The advanced oxidation means 41 is intended to oxidatively decompose persistent substances contained in the wastewater by utilizing strong oxidative power of radicals such as OH radicals or O radicals generated by adding an oxidizing agent to the wastewater. Examples of the oxidizing agent used as a radical source include persulfuric acid, hydrogen peroxide, ozone, and hypochlorous acid.

Among them, persulfuric acid and/or persulfate is preferably used. The reason for this is that hydrogen peroxide, ozone, or hypochlorous acid as an oxidizing agent easily self-decomposes and the problem of efficiency reduction caused by self-decomposition cannot be avoided, and in addition, there is a fear that an unnecessary intermediate product is produced. Further, there is a case where oxygen gas, a chlorine-based gas, or ozone gas is produced from hydrogen peroxide, hypochlorous acid, or ozone, and therefore safety against these gases and explosion proofness need to be taken into consideration.

For this reason, the advanced oxidation means 41 will be described below with reference to a case where persulfuric acid is used as an oxidizing agent. The advanced oxidation means 41 is intended to oxidatively decompose persistent substances by reacting the persistent substances with radicals, such as sulfate ion radicals shown in the following reaction process or OH radicals, generated by adding persulfuric acid (peroxodisulfuric acid) and/or its salt (e.g., a sodium salt, a potassium salt, an ammonium salt) to the wastewater and heating the wastewater. It is to be noted that the above-mentioned persulfuric acid and/or its salt will be hereinafter referred to as "persulfuric acid" unless otherwise specified.

S₂O₈²⁻ + 2e⁻ → 2SO₄²⁻

Unlike hydrogen peroxide, ozone, or hypochlorous acid, persulfuric acid appropriately acts on various persistent substances contained in the wastewater and can oxidatively decompose these substances almost completely into sulfuric acid, carbon dioxide, or nitrogen. This oxidative decomposition is a reaction involving sulfate ion radicals or OH radicals in a reaction process. It is estimated that the reaction mechanism of this reaction is basically the same as that of other radical reactions, but much more highly-efficient decomposition can be achieved by thermal decomposition (also referred to as oxidative decomposition) using persulfuric acid than by other radical reactions.

Therefore, unlike conventional catalytic wet oxidation or treatment using an oxidizing agent such as hypochlorous acid, it is not necessary to perform two or more types of advanced oxidation processes in combination or to perform the same advanced oxidation process in a multistep manner to oxidatively decompose acetic acid, alcohols, thiocyanates, or polythionates.

As described above, the reason why various persistent substances can be highly efficiently decomposed by oxidative decomposition using persulfuric acid is uncertain, but it is estimated that oxidative decomposition using persulfuric acid is based on an oxidation mechanism involving sulfate ion radicals. Further, it is estimated that such highly-efficient decomposition is related to the homogenous presence of OH radicals, which are generated by heating, in high concentration near dissolved persistent substances. That is, it is considered that oxidative decomposition using persulfuric acid makes use of the most of oxidative power of sulfate ion radicals and OH radicals.

In the case of oxidative decomposition using persulfuric acid, sulfate ion radicals and OH radicals are generated by heating, a decomposition reaction proceeds rapidly, and self-decomposition of persulfuric acid is relatively less likely to occur because the reaction occurs in a liquid. The amount of persulfuric acid to be added may be close to the amount that is theoretically required for decomposition even though it depends on decomposition ratio. With this amount of persulfuric acid, decomposition can be appropriately performed. Unlike hydrochloric acid, persulfuric acid does not increase the risk of corrosion of equipment materials. Further, persulfuric acid can be added in the form of an aqueous solution, and therefore no hazardous gases are produced.

Therefore, it is not necessary to use expensive corrosion-resistant materials, collect hazardous gases, and provide facilities for detoxification. Further, it is not necessary to perform ultraviolet irradiation and use catalysts, and therefore basically, it is only necessary to provide a means for heating the wastewater and an oxidation treatment tank in which oxidative decomposition treatment is performed by adding persulfuric acid. The oxidation treatment tank is preferably equipped with a stirring means so that persulfuric acid added to the wastewater can be easily and uniformly mixed with the wastewater. The oxidation treatment tank is preferably hermetically closed. In this regard, in a case where gas in a gas phase in the oxidation treatment tank is released into the atmosphere, it is preferable to provide equipment for returning a liquid fraction, which is obtained by cooling the gas before its releases, as a reflux to a liquid phase in the oxidation treatment tank. It is preferable that this equipment is provided separately from temperature (pressure) control equipment.

As described above, oxidative decomposition can be performed simply by adding persulfuric acid in an amount close to the amount of persulfuric acid theoretically required for decomposition to the wastewater and heating the wastewater. This makes it possible to inexpensively and stably treat the wastewater by simple facilities and systems. Therefore, it can be said that the method according to the present invention is very suitable when a large amount of wastewater containing two or more persistent substances needs to be treated.

A specific configuration of the advanced oxidation means 41 is one in which two or more persistent substances contained in the wastewater are oxidatively decomposed by, for example, heating the wastewater to 50 to 200°C and adding persulfuric acid to the wastewater to thermally decompose the persulfuric acid. The reason why the lower limit of the heating temperature is set to 50°C is that if the heating temperature is lower than 50°C, decomposition hardly proceeds. The reason why the upper limit of the heating temperature is set to 200°C is that persulfuric acid self-decomposes when exposed to high temperatures and therefore the amount of loss of persulfuric acid becomes relatively large.

From the viewpoint of shortening decomposition time, it is advantageous to set the heating temperature as high as possible within the above temperature range. However, a certain degree of suppression of a rise in the temperature of the wastewater enables low-pressure operation, and therefore the heating temperature is preferably 60 to 100°C. When the wastewater is heated to 50 to 200°C, reaction time is about 10 minutes to 5 hours, but when the wastewater is heated to 60 to 100°C, a more practical reaction time of 30 to 180 minutes is achieved.

The amount of persulfuric acid to be added widely varies depending on types or concentrations of persistent substances that need to be removed. In order to achieve high removal ratio, the amount of persulfuric acid to be added is generally 0.3 to 10 times, preferably 0.3 to 5 times, more preferably 0.5 to 2 times the amount of persulfuric acid theoretically required for decomposition (the stoichiometric amount of persulfuric acid required to decompose all persistent substances contained in the wastewater). If the amount of persulfuric acid to be added is less than 0.3 times the amount of persulfuric acid theoretically required for decomposition, there is a fear that decomposition ratio is lowered or intermediate products such as nitrogen-containing compounds other than ammonia and nitric acid or polythionates are produced.

On the other hand, the upper limit of the amount of persulfuric acid to be added is set larger than the amount of persulfuric acid theoretically required for decomposition in consideration of self-decomposition of persulfuric acid and a reaction rate. If the amount of persulfuric acid to be added is larger than ten times the amount of persulfuric acid theoretically required for decomposition, oxidation to nitric acid proceeds and oxidation of ammonia contained in raw wastewater also proceeds, which is undesirable because a large facility for removing nitric acid absolutely needs to be provided downstream.

Oxidative decomposition is started by heating the wastewater and adding persulfuric acid in such a manner as described above. At this time, when the pH of the wastewater is in a strongly acidic range, sulfur deposition or production of hydrogen sulfide occurs due to disproportionation of thiosulfates, and when the pH of the wastewater is in an acidic range, release of cyanide gas occurs. On the other hand, when the pH of the wastewater is in a strongly alkaline range, release of ammonia gas occurs. Therefore, from the viewpoint of preventing a reduction in decomposition ratio or eliminating the necessity to treat produced gas, it is not preferred that the wastewater is exposed to such pH ranges during oxidative decomposition even for a short time.

For this reason, the wastewater is preferably maintained at a pH of 6 to 9 that is near neutral during oxidative decomposition. The wastewater can be maintained at such a pH near neutral during oxidative decomposition by adjusting the pH of the wastewater by, for example, adding an acid or an alkali to the wastewater before the oxidative decomposition of persistent substances is started by thermal decomposition of persulfuric acid. More specifically, the wastewater is adjusted to an alkaline pH of about 7.0 to 11.0 in a pH adjustment tank provided upstream of the oxidation treatment tank (which will be described later) and equipped with an apparatus for adding an acid and/or an alkali.

Thereafter, there is a possibility that the pH of the wastewater is lowered as oxidative decomposition proceeds. Particularly, there is a case where the pH of the wastewater is significantly lowered due to the lack of alkali because sulfuric acid is produced as a by-product from persulfuric acid. Therefore, if necessary, the pH of the wastewater is preferably adjusted by adding an alkaline agent such as sodium, calcium or potassium. This makes it possible to maintain the wastewater at a pH of about 6 to 9 that is near neutral.

Even when treatment is performed under the above-described conditions, persulfuric acid sometimes slightly self-decomposes. In order to allow the reaction to more efficiently proceed, it is important to more appropriately set the conditions of a reaction field while suppressing self-decomposition of persulfuric acid. In this case, a method for heating the wastewater and a method for adding persulfuric acid are issues.

The wastewater is generally heated by a method utilizing heat transfer caused by a temperature difference between the wastewater and a heating medium. Therefore, a heat-transfer surface from which heat is transferred is a high-temperature area that is in contact with the wastewater. For this reason, when the wastewater is heated after addition of persulfuric acid, self-decomposition of persulfuric acid tends to proceed at the heat transfer-surface. Further, addition rate of persulfuric acid or agitation speed of a mixture of added persulfuric acid and the wastewater has an influence on the efficiency of the reaction. Therefore, a method capable of adding persulfuric acid as quickly as possible and of quickly mixing persulfuric acid and wastewater is required.

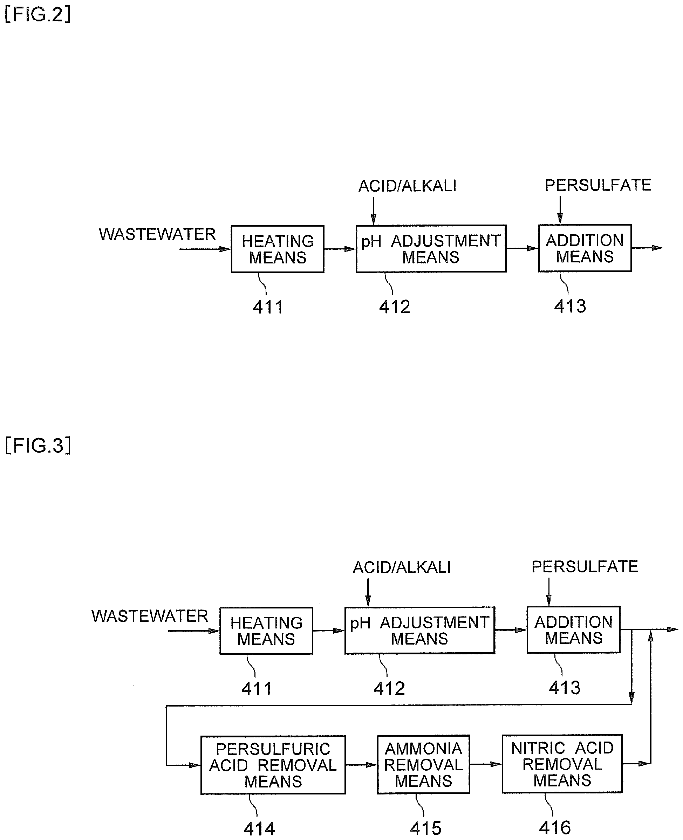

In consideration of the requirement, the present inventors have studied a preferred heating method and a preferred method for adding persulfuric acid, and as a result have found that it is preferred that persulfuric acid is added after wastewater is heated and then they are quickly and sufficiently mixed. More specifically, the present inventors have found that, as shown in Fig. 2, when the wastewater is treated by performing heating of the wastewater by a heating means 411, and if necessary, adjustment of the pH of the wastewater by a pH adjustment means 412, and addition of persulfuric acid by an addition means 413 in this order, the oxidative decomposition reaction is allowed to proceed in a relatively short period of time while self-decomposition of persulfuric acid can be suppressed. It is to be noted that the heating means 411 and the pH adjustment means 412 may be provided in reverse order.

As a specific equipment used when persulfuric acid is added by the addition means 413 after the wastewater is heated by the heating means 411, for example, a heating tank is provided upstream of the oxidation treatment tank, where the heating tank is equipped with a coil and/or a jacket in which a heating medium such as steam or hot water is circulated. In this case, the wastewater is once received by the heating tank so as to be heated to a predetermined temperature, and then it is transferred into the oxidation treatment tank. Thereafter, persulfuric acid is added to the wastewater in the oxidation treatment tank to treat persistent substances by oxidative decomposition. In order to more efficiently heat the wastewater, the heating tank may be equipped with a stirrer.

In order to further reduce the loss of persulfuric acid while maintaining removal performance at a satisfactory level, the total amount of persulfuric acid to be added may be added to the wastewater in twice or more. For example, before the wastewater heated in the heating tank is introduced into the oxidation treatment tank, 30 to 90%, preferably 50 to 80% of the total amount of persulfuric acid to be added, which is calculated from the above-described stoichiometric amount, is added to the wastewater that is flowing through a line for transporting the wastewater from the heating tank into the oxidation treatment tank. Then, the rest of persulfuric acid is added to the wastewater contained in the oxidation treatment tank. If the amount of persulfuric acid to be initially added is less than 30% of the total amount of persulfuric acid to be added, the effect of the split addition cannot be obtained. On the other hand, if the amount of persulfuric acid to be initially added exceeds 90% of the total amount of persulfuric acid to be added, the amount of persulfuric acid to be added cannot be appropriately controlled.

When the total amount of persulfuric acid to be added is added in twice or more in such a manner as described above, it is preferred that the amount of persulfuric acid to be initially added is adjusted based on the measured concentration of persulfuric acid contained in the oxidatively-treated wastewater discharged from the oxidation treatment tank. This makes it possible to adjust the amount of persulfuric acid to be added depending on the loads of persistent substances even when the concentrations of persistent substances in raw wastewater fluctuate, thus resulting in a reduction in the consumption of persulfuric acid.

In order to achieve high removal ratio, the amount of persulfuric acid to be added to the oxidation treatment tank is preferably adjusted so that persulfuric acid remains to some extent in the oxidatively-treated wastewater discharged from the oxidation treatment tank. The concentration of the remaining persulfuric acid is 2 to 50 mg/L, preferably 2 to 10 mg/L. The concentration of persulfuric acid can be measured by, for example, an ORP meter, iodometry, or ion chromatography.

By controlling the heating temperature of the wastewater in such a manner as described above, it is possible to control the removal ratio (also referred to as "decomposition ratio" or "decomposition removal ratio") or decomposition rate of persistent substances. That is, an increase in the heating temperature promotes the generation of radicals from persulfuric acid and the oxidative decomposition reaction of persistent substances, which makes it possible to control the removal ratio of persistent substances in accordance with the amount of the wastewater or the concentrations of persistent substances. Further, control of the heating temperature of the wastewater and adjustment of the amount of persulfuric acid to be added may be performed in combination. This makes it possible to appropriately control the removal ratio or the decomposition rate while further reducing the consumption of persulfuric acid.

More specifically, the above-described control of the heating temperature or adjustment of amount of persulfuric acid to be added can be achieved by adjusting the flow rate of the heating medium or the amount of persulfuric acid to be added based on the measured persulfuric acid concentration, temperature, COD, and concentrations of substances to be decomposed of the oxidatively-treated wastewater discharged from the oxidation treatment tank. Alternatively, a system may be provided which adjusts the temperature of the wastewater (the flow rate of the heating medium), the amount of persulfuric acid to be added, and the amount of an acid and/or an alkali to be added in accordance with a change of the amount or liquid properties of the wastewater to be treated by the advanced oxidation means 41. In this case, the system may use a decomposition ratio estimation formula determined by using, as parameters, the liquid properties of the wastewater to be treated by the advanced oxidation means 41, the reaction time and reaction temperature of the oxidative decomposition reaction, the pH of the wastewater during the reaction, and the amount of persulfuric acid to be added.

When the decomposition ratio of persistent substances after oxidation treatment are not sufficiently high, the oxidatively-treated wastewater discharged from the oxidation treatment tank may be returned to the upstream side of the oxidation treatment tank for cyclic treatment. This makes it possible to achieve normal decomposition ratio even when the liquid properties of the wastewater are significantly changed.

In order to more efficiently achieve high decomposition performance during decomposition using persulfuric acid, optical energy irradiation may be performed in addition to heating of the wastewater. Further, an auxiliary oxidizing agent such as hydrogen peroxide, hypochlorous acid, or ozone may be used in combination with persulfuric acid. In this case, the auxiliary oxidizing agent is decomposed by radicals generated by heating persulfuric acid, and oxidative power of radicals generated by decomposition of the auxiliary oxidizing agent is additionally obtained. That is, hydrogen peroxide or hypochlorous acid can be oxidatively decomposed without using an oxidative decomposition means such as UV irradiation.

Further, optical energy irradiation may be performed after decomposition is performed by adding persulfuric acid. The optical energy irradiation to persulfuric acid and persistent substances of low concentration, which remain in the wastewater kept at a high temperature, makes it possible to allow the decomposition reaction to proceed toward completion.

As described above, utilization of oxidative activity obtained by thermal decomposition basically makes it possible to oxidatively treat the wastewater by heating operation using a general reaction tank. Therefore, the wastewater can be stably treated at relatively low temperature and pressure, which makes operation and maintenance simple and easy. Further, the wastewater can be treated in a short period of time without using an expensive catalyst or ultraviolet light, which is advantageous from the viewpoint of low cost and practical use. Further, the amount of an oxidizing agent to be used is small, no hazardous gases are produced, few hazardous intermediate products are produced, and no sludge is produced.

Meanwhile, gasification plant wastewater sometimes originally contains ammonia (NH₃), and therefore there is a case where an NH₃ removal step needs to be performed after the above-described treatment using the oxidation treatment tank to meet effluent limits for nitrogen. The present inventors have found that when nitrogen-containing compounds (e.g., thiocyanates (SCN) and cyanides (CN)) are treated by oxidation treatment using persulfuric acid, there is a case where a nitric acid removal step needs to be performed after treatment using the oxidation treatment tank.

In this regard, the present inventors have further studied and found that NH₃ and nitric acid are produced as by-products by oxidation treatment using persulfuric acid and contained in treated wastewater. That is, it has been confirmed that nitric acid is a by-product produced by decomposition of persulfuric acid because gasification plant wastewater is generated when reducing gas is wet-cleaned and therefore originally contains no nitric acid.

Further, it has also been confirmed that nitric acid is produced as a by-product by oxidation of not only nitrogen in thiocyanates (SCN) and cyanides (CN) but also part of ammonia contained in raw wastewater. Therefore, when gasification plant wastewater is oxidatively treated using persulfuric acid, if necessary, a nitric acid removal step is also performed in addition to the NH₃ removal step after the above-described treatment using the oxidation treatment tank to meet effluent limits for nitrogen.

Hereinbelow, a specific example of a treatment method including the above-described treatment for removing ammonia and/or treatment for removing nitric acid will be described in more detail with reference to Fig. 3. The treatment method shown in Fig. 3 is the same as the above-described treatment method shown in Fig. 2 except that at least part of the wastewater that has been oxidatively treated using persulfuric acid is treated by an ammonia removal treatment means 415 and/or a nitric acid removal treatment means 416.

First, the ammonia removal treatment means 415 will be described. When nitrogen-containing compounds such as thiocyanates (SCN) and cyanides (CN) are treated by the above-described oxidation treatment method using persulfuric acid, the treated wastewater contains NH₃ produced as a by-product. The ammonia removal treatment means 415 shown in Fig. 3 is directed to remove this by-product NH₃ to meet effluent limits for nitrogen. The NH₃ removal means 415 can use, for example, a stripping method, a catalytic oxidation method, a biological treatment method, a membrane treatment method, or an oxidation treatment method using hypochlorous acid.

The stripping method is a method for stripping NH₃ from wastewater by increasing the pH of the wastewater to 10 or higher using an alkaline agent such as NaOH or Ca(OH)₂ and then introducing gas such as steam or air into the wastewater. By using the stripping method, wastewater from which NH₃ has been removed can be obtained and stripped NH₃ can be recovered as ammonia water.

When the gas to be introduced into the wastewater is steam, the temperature of the wastewater can be increased, which is preferred because NH₃ can be efficiently removed. As described above, the wastewater is heated to 50 to 200°C upstream of the NH₃ removal treatment means 415 to perform oxidation treatment using persulfuric acid. Therefore, the stripping method can effectively utilize the increased liquid temperature. When the wastewater contains a high level of ammonia, ammonia may be removed before decomposition treatment using persulfuric acid.

The catalytic oxidation method is a method in which wastewater is heated to a high temperature and then brought into contact with a catalyst such as a noble metal in the presence of an oxidizing agent such as hydrogen peroxide or oxygen at high temperature. As described above, the wastewater has been heated to 50 to 200°C to perform oxidation treatment using persulfuric acid, and therefore treatment of the wastewater using the catalytic oxidation method after the oxidation treatment can effectively utilize the heat of the wastewater as in the case of the stripping method. This catalytic oxidation method can use residual persulfuric acid as an oxidizing agent and can decompose not only NH₃ but also persistent substances. Therefore, use of the catalytic oxidation method can treat persistent substances through a combination of decomposition using persulfuric acid and decomposition by catalytic oxidation. This makes it possible to easily achieve stable and high removal ratio and to perform efficient operation.

The NH₃ removal means 415 can concurrently treat NH₃ originally contained in raw wastewater. However, in the case of treating a raw wastewater containing high level of NH₃, the nitric acid treatment means 416 needs to be provided because part of NH₃ is converted into nitric acid. When the nitric acid treatment means 416 needs to be provided on a large scale, the NH₃ removal means 415 may be provided also between the heating means 411 and the addition means 413.

Hereinbelow, the nitric acid removal means 416 will be described. As described above, it has been found that treatment of nitrogen-containing compounds such as thiocyanates (SCN) and cyanides (CN) by the above-described oxidation using persulfuric acid produces ammonia, and that nitric acid is produced as a by-product from part of the ammonia. From this, it has been found that the nitric acid removal means 416 is preferably provided downstream of the oxidation treatment tank to meet effluent limits for nitrogen. Specific examples of a nitric acid treatment method to be used in the nitric acid removal means 416 include biological treatment, electrodialysis, treatment using ion-exchange resin, adsorption, catalytic reduction, and reduction using chemical agents. The above-described nitric acid treatment method may be performed on a concentrated solution of nitric acid obtained by performing membrane treatment as pretreatment before treatment using the nitric acid removal means 416.

The above-described ammonia removal treatment means 415 and the nitric acid removal treatment means 416 are directed to individually remove ammonia and nitric acid, respectively. However, both ammonia and nitric acid can be efficiently treated by biological treatment. The reason for this is that gasification plant wastewater contains organic substances, and therefore organic substances such as alcohols suitable for biological treatment are allowed to remain in the oxidatively-treated wastewater by controlling oxidation treatment using persulfuric acid.

Substances causing biological inhibition are reduced to low levels by decomposition performed by adding persulfuric acid, and therefore it is not necessary to take measures against biological inhibition. Further, the amount of persulfuric acid to be added can be reduced by performing biological treatment after oxidation treatment. However, when persulfuric acid remains, the residual persulfuric acid is preferably decomposed by a persulfuric acid decomposition step performed by using activated carbon or by catalytic oxidation or optical energy irradiation.

This makes it possible to inexpensively achieve stable biological treatment performance. Therefore, ammonia and nitric acid can be continuously biologically treated by nitrification and denitrification achieved by conventional anaerobic and aerobic treatment or by using a biofilm reactor. An object to be biologically treated may be either ammonia or nitric acid. It is said that cyanide-containing wastewater cannot be biologically treated in general due to inhibition of growth of living organism. However, the treatment method shown in Fig. 3 does not have such a problem because cyanides are decomposed by persulfuric acid before biological treatment.

Persulfuric acid remaining in the wastewater is not subject to an effluent limit, but is preferably removed before the release of the wastewater because its oxidative power is strong. Particularly, in the case where the wastewater is subject to biological treatment, there is a possibility that persulfuric acid inhibits biological treatment. Therefore, when the ammonia removal treatment means 415 and the nitric acid removal treatment means 416 are biological treatment means, persulfuric acid is preferably removed upstream of the ammonia removal treatment means 415 and the nitric acid removal treatment means 416 as shown in Fig. 3.

Examples of a method for aggressively decomposing residual persulfuric acid include: activated carbon treatment performed by bringing the wastewater into contact with activated carbon; and sulfite reduction performed by adding a sulfite. In the case of activated carbon treatment, persulfuric acid can be easily decomposed by, for example, adjusting activated carbon to a pH in an acidic range, preferably pH 2 to 6 before introduction of the wastewater and then allowing the wastewater kept at a high temperature to pass through the activated carbon. In this case, a metal, preferably iron chloride or iron sulfate is preferably added to the wastewater as a catalyst in an amount of 5 to 100 mg/L as iron.

The wastewater that has been treated by the advanced oxidation means 41 is then sent to the solid-liquid separation means 42 to remove sulfuric acid generated by the advanced oxidation means 41. More specifically, calcium carbonate or calcium hydroxide is added to the wastewater received by the solid-liquid separation means 42, such as a solid-liquid separation tank. The calcium carbonate or calcium hydroxide is added only in an amount required to neutralize sulfuric acid produced as a by-product so as to neutralize sulfuric acid contained in the wastewater and to crystallize calcium sulfate (gypsum). Thereafter, solid-liquid separation is performed. During these operations, the temperature of the wastewater is preferably set to 50 to 70°C to lower the solubility of gypsum.

The advanced oxidation means 41 and the solid-liquid separation means 42 have been described above with reference to a case where they are provided as separate units. However, the present invention is not limited to such a case, and the advanced oxidation means 41 and the solid-liquid separation means 42 may be provided as one unit. That is, the advanced oxidation reaction and the neutralization reaction for crystallizing calcium sulfate may be performed concurrently in a single reaction tank. In such a case where oxidation treatment is performed by adding persulfuric acid while an alkaline agent such as calcium is added, sulfuric acid generated by decomposition of persulfuric acid can be quickly solidified by crystallization of gypsum and therefore an increase in the concentration of sulfuric acid can be suppressed. Therefore, persistent substances can be treated without reducing the speed and efficiency of oxidation treatment using persulfuric acid. Further, downstream selenium treatment or reverse osmosis membrane treatment can also be efficiently performed.

The decomposition treatment step 4 using the advanced oxidation means 41 has been described above, but a method for performing the decomposition treatment step 4 is not limited to one using the advanced oxidation means as long as it can decompose COD components. Examples of a method performed without using the advanced oxidation means include a catalytic oxidation method and a treatment method using a supercritical-state fluid.

The wastewater that has been treated in the decomposition treatment step 4 is then sent to a residual cyano complex removal step 5, if necessary. The residual cyano complex removal step 5 acts as a kind of finishing step to decompose not only cyano complexes and thiocyanate complexes contained in the wastewater but also other residual persistent substances that have not been able to be treated in the previous steps including the decomposition treatment step 4. As described above, the residual cyano complex removal step 5 can also treat cyanides removed in the free cyanide removal step 2..

More specifically, the residual cyano complex removal step 5 is performed by, for example, a cyano complex decomposition means 51 such as a storage tank to receive the wastewater. The cyano complex decomposition means 51 decomposes cyano complexes etc. by adding sodium hydroxide and sodium hypochlorite or metallic iron or ferrous ions to the wastewater. It is difficult for the advanced oxidation method using persulfuric acid to completely decompose iron-cyano complexes, but iron-cyano complexes can be satisfactorily removed by treatment using, for example, a prussian blue method or an alkaline chlorination method. A method used in this step is not limited thereto as long as iron-cyano complexes can be satisfactorily removed. In the case of using an alkaline chlorination method, the pH and temperature of the wastewater contained in the storage tank are preferably maintained at about 8 to 10 and about 70 to 90°C or higher, respectively.

It is estimated that coal gasification wastewater sometimes contains selenium, boron, and fluorine which are contained in coal. In this case, the wastewater that has been treated in the residual cyano complex removal step 5 is then sent to a selenium·fluorine removal step 6. In the selenium-fluorine removal step 6, selenium and fluorine are removed by adding aluminum chloride to the wastewater and then bringing the wastewater into contact with an iron material under acidic conditions. Fluorine to be removed in this step is fluorides difficult to treat such as fluoroboric acid. An example of the selenium·fluorine removal step 6 shown in Fig. 1 is performed by a second pH adjustment means 61, an aluminum chloride addition means 62, an iron material contact means 63, an iron coagulation means 64, and a sludge separation means 65. Selenium and fluorine can be removed by treating the wastewater using these means in this order.

Hereinbelow, each of the means will be described more specifically. First, the wastewater is received by the second pH adjustment means 61 including, for example, a mixing tank, and the pH of the wastewater is adjusted to 3 or higher but 7 or lower, preferably 4 or higher but 7 or lower by adding an inorganic acid under stirring. As the inorganic acid, a common inorganic acid such as hydrochloric acid or sulfuric acid can be used, but hydrochloric acid is preferably used. This is because, as will be described later, a calcium-containing alkaline agent is added by the iron coagulation means 64, and therefore when sulfuric acid is used, there is a fear that gypsum scale is produced by a reaction between the sulfuric acid and the calcium-containing alkaline agent.

Further, the use of hydrochloric acid as the inorganic acid is preferred also for the reason that the amount of an aluminum compound to be added by the aluminum chloride addition means 62 (which will be described later) can be reduced because the concentration of chloride ions in the wastewater is increased and therefore the concentration of calcium is increased and generation of calcium fluoride is promoted so that the removal ratio of fluorine is increased.

The position at which the inorganic acid is added is not particularly limited. For example, the inorganic acid may be directly added to the mixing tank equipped with a pH control apparatus while the pH of the wastewater is controlled by the pH control apparatus. Alternatively, a pH adjustment tank equipped with a pH control apparatus may be separately provided upstream of the mixing tank. In this case, the inorganic acid may be added to the wastewater once received by the pH adjustment tank so that the mixing tank can receive the wastewater whose pH has been adjusted. Alternatively, instead of the pH adjustment tank, a mixing apparatus such as an in-line mixer may be provided in a supply line connected to the mixing tank. In this case, the inorganic acid may be added to the in-line mixer and mixed with the wastewater.

The wastewater whose pH has been adjusted by the second pH adjustment means 61 is then sent to the aluminum chloride addition means 62 to add an aluminum compound to decompose fluoroboric acid contained in the wastewater. As the aluminum compound, aluminum chloride or aluminum sulfate can be used, but aluminum chloride is preferably used. This is because, as described above, when aluminum sulfate is used, there is a fear that gypsum scale is produced by a reaction between the calcium-containing alkaline agent and sulfuric acid, but when aluminum chloride is used, the concentration of chloride ions can be increased.

Addition of the aluminum compound may be performed by directly adding the aluminum compound to the above-described mixing tank together with the above-described inorganic acid or by adding only the aluminum compound to the above-described mixing tank containing the wastewater whose pH has been adjusted in advance by the above-described mixing apparatus such as an in-line mixer or by the above-described pH adjustment tank. However, the latter addition method is preferred because fluoroboric acid can be decomposed by the aluminum compound after the pH of the wastewater becomes almost uniform. The amount of the aluminum compound to be added depends on the concentration of fluoroboric acid to be decomposed in the wastewater or the removal ratio of fluoroboric acid, but usually, the aluminum compound is preferably added so that the weight ratio of Al to F is in the range of 1 to 20.

The wastewater that has been treated by the aluminum chloride addition means 62 is then sent to the iron material contact means 63 and brought into contact with an iron material. At this time, the pH of the wastewater in the iron material contact means 63 is maintained at a pH of about 3 to 7 that is the same as that of the wastewater in the second pH adjustment means 61 or the aluminum chloride addition means 62, and therefore the iron material is dissolved in the wastewater. Fe²⁺ generated in the wastewater by dissolution of the iron material is oxidized to Fe³⁺, and reducing power generated by this oxidation reduces hexavalent selenium contained in the wastewater to tetravalent selenium.

In the iron material contact means 63, the pH of the wastewater is weakly acidic, and therefore oxygen-containing gas such as air is introduced into the wastewater as a dissolution promoter. Iron is dissolved by introducing such oxygen-containing gas into the wastewater, and most of Fe²⁺ generated by dissolution of iron is finally oxidized to Fe³⁺. Further, as described above, the pH of the wastewater is previously adjusted to 3 to 7, and therefore Fe³⁺ is precipitated as iron(III) hydroxide. At this time, zerovalent selenium or tetravalent selenium is coprecipitated with iron(III) hydroxide. The precipitation of iron hydroxide can be completed by the iron coagulation means 64 that will be described later at a pH near neutral, and therefore, the calcium-containing alkaline agent does not need to be added to the iron coagulation means 64 or the amount of the calcium-containing alkaline agent to be added to the iron coagulation means 64 can be significantly reduced.

When the amount of oxygen introduced into the iron material contact means 63 is small or oxygen is not introduced into the iron material contact means 63 so that Fe²⁺ remains in the wastewater after the treatment by the iron material contact means 63, the step of introducing oxygen-containing gas may be separately performed after the treatment by the iron material contact means 63 to oxidize Fe²⁺ to form a precipitate.

The wastewater that has been treated by the iron material contact means 63 is then sent to the iron coagulation means 64, and a calcium-containing alkaline agent (calcium oxide and/or calcium hydroxide) is added as an alkaline agent to supply Ca ions to the wastewater and to increase the pH of the wastewater to 6 or higher but 9 or lower, preferably 6.5 or higher but 8.5 or lower so as to exceed the pH of the wastewater in the iron material contact means 63. The alkaline agent is not limited to the calcium-containing alkaline agent, and a sodium-based alkaline agent (NaOH, NaHCO₃, Na₂CO₃) may be used when calcium is sufficiently dissolved in the wastewater.

As a result, calcium fluoride (CaF₂) is generated, and in addition, iron hydroxide and aluminum hydroxide are also generated. When the concentration of Ca in the wastewater in the iron coagulation means 64 is not sufficient, CaCl₂ may be added together with the calcium-containing alkaline agent. This makes it possible to increase the concentration of dissolved calcium and therefore to effectively treat fluorine by generation of CaF₂.

As described above, when a calcium source is not added upstream of the iron coagulation means 64, a calcium source (e.g., calcium hydroxide, calcium carbonate, calcium chloride) needs to be supplied to the iron coagulation means 64 to generate calcium fluoride, but on the other hand, iron hydroxide and aluminum hydroxide also need to be generated as precipitates, and therefore the pH of the wastewater in the iron coagulation means 64 is preferably set higher than that of the wastewater in the iron material contact means 63. It is to be noted that the pH of the wastewater in the iron coagulation means 64 needs to be set to 9 or lower because aluminum hydroxide composed of aluminum that is an amphoteric metal is again dissolved in an alkaline range.

Further, in order to satisfactorily complete solid deposition of iron hydroxide at a pH of 9 or lower, as described above, it is absolutely necessary to convert iron dissolved in the wastewater into Fe³⁺. Therefore, aggressive oxidation may be performed by, for example, blowing air into the wastewater in the iron coagulation means 64 while the removal ratio of selenium and the consumption of the iron material are checked. This makes it possible to precipitate selenium and part of boron together with iron hydroxide. Iron (Fe²⁺) dissolved in the wastewater, in which aluminum hydroxide and iron(III) hydroxide are separated as precipitates, can be removed by oxidizing with air to form iron(III) hydroxide as a precipitate or by adjusting the wastewater to a strongly alkaline pH to form iron(II) hydroxide as a precipitate.

The wastewater containing these generated calcium fluoride, iron hydroxide, and aluminum hydroxide is then sent to the sludge separation means 65 such as a coagulative precipitation tank utilizing difference in specific gravity (e.g., a thickener) and is subjected to solid-liquid separation. This makes it possible to discharge the calcium fluoride, iron hydroxide, and aluminum hydroxide as sludge to obtain a liquid fraction from which substances that need to be removed have been removed.

As the sludge separation means 65, a sand filtration system or a membrane separation system may be used instead of the above-described coagulative precipitation tank, such as a thickener, utilizing a difference in specific gravity. Alternatively, such a sand filtration system or a membrane separation system may be provided downstream of the coagulative precipitation tank. For example, when a microfiltration (MF) membrane is provided as a membrane separation system downstream of the coagulative precipitation tank, the problem of membrane fouling can be prevented because iron hydroxide and aluminum hydroxide are almost completely removed from the liquid fraction in the upstream coagulative precipitation tank.

As described above, since the wastewater can be treated in a pH range from weakly acidic to neutral by introducing oxygen (air) into the iron material contact means 63, the pH of the wastewater does not need to be significantly changed when the wastewater is treated by the second pH adjustment means 61 to the iron material contact means 63. Further, since the entirety of the selenium-fluorine removal step 6 can be performed at nearly room temperature, the consumption of chemical agents can be reduced and selenides and fluorides can be efficiently removed at low energy.

Further, since the wastewater can be treated in a pH range from weakly acidic to neutral by using oxygen (air), the consumption of the iron material can be reduced and further the amount of the aluminum compound to be added for fluorine treatment can also be reduced by utilizing coagulation of iron hydroxide. Further, a polymer flocculant is also added to promote coagulation, thereby improving the efficiency of solid-liquid separation. Further, since reductants have been treated by the upstream advanced oxidation means 41, normal removal performance can be achieved in the selenium-fluorine removal step 6 without lowering efficiency.

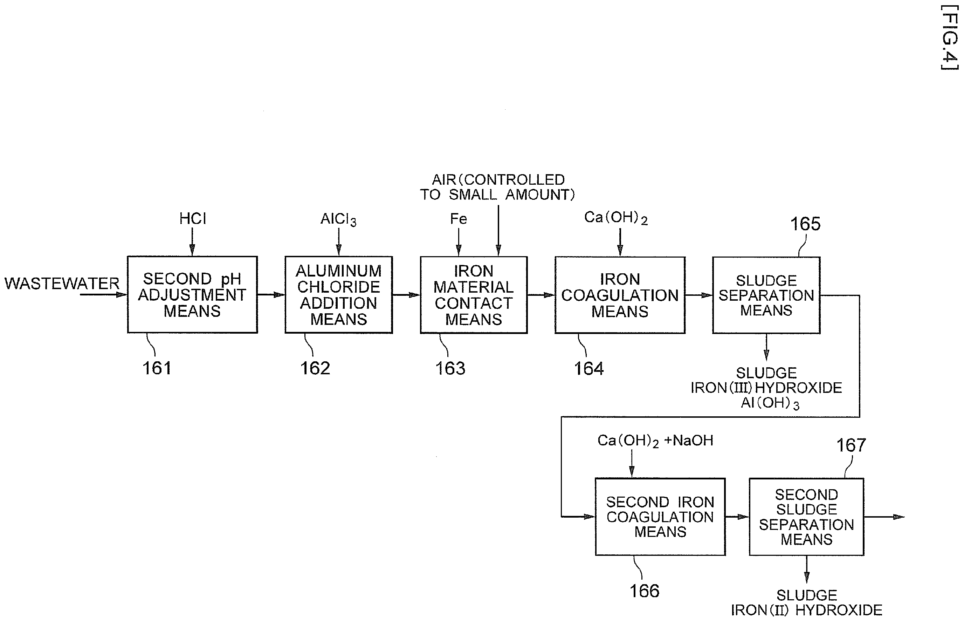

Hereinbelow, another specific example of the selenium-fluorine removal step 6 will be described with reference to Fig. 4. The selenium-fluorine removal step 6 shown in Fig. 4 is suitable when raw wastewater contains cyanides in addition to selenides, fluorides, and borides. Cyanides are hazardous substances and are subject to control, and therefore cyanides as well as selenides, fluorides, and borides need to be removed.

More specifically, when the wastewater discharged from the residual cyano complex removal step 5 contains cyanides in addition to selenides, fluorides, and borides as substances that need to be removed, as shown in Fig. 4, the above-described substances that need to be removed can be removed by treating the wastewater by a second pH adjustment means 161 and an aluminum chloride addition means 162 in the same manner as in the above-described method shown in Fig. 1 and then by further sequentially treating the wastewater by an iron material contact means 163, an iron coagulation means 164, a sludge separation means 165, a second iron coagulation means 166, and a second sludge separation means 167. It is to be noted that the second pH adjustment means 161 and the aluminum chloride addition means 162 are the same as the above-described second pH adjustment means 61 and the aluminum chloride addition means 62, and therefore the iron material contact means 163 to the second sludge separation means 167 will be described below more specifically.

The iron material contact means 163 is the same as the iron material contact means 63 shown in Fig. 1 in that the wastewater that has been treated by the upstream aluminum chloride addition means 162 is brought into contact with an iron material to dissolve iron. However, the iron material contact means 163 is different in that the amount of oxygen-containing gas, such as air, to be introduced into the wastewater is controlled to be smaller as compared to the iron material contact means 63 shown in Fig. 1. Therefore, unlike the iron material contact means 63, the amount of dissolved iron is smaller and only part of Fe²⁺ is oxidized to Fe³⁺ and the rest of Fe²⁺ remains in the wastewater without change. It is to be noted that when the ability to treat selenium etc. needs to be enhanced as compared to when the iron material contact means 63 shown in Fig. 1 is used, the pH of the wastewater may be set lower.

Then, as in the case of the iron coagulation means 64 shown in Fig. 1, the iron coagulation means 164 adds a calcium-containing alkaline agent to the wastewater to adjust the pH of the wastewater to 6 or higher but 9 or lower. This makes it possible to supply Ca ions to the wastewater as well as to increase the pH of the wastewater to 6 or higher but 9 or lower so as to exceed the pH of the wastewater in the iron material contact means 163. Therefore, almost all Fe³⁺ ions form iron hydroxide, and calcium fluoride and aluminum hydroxide are also generated.

Further, selenium and boric acid are also precipitated together with the thus generated solid. It is to be noted that calcium fluoride can be precipitated by coagulation in a larger amount by adjusting the pH of the wastewater to near neutral. As in the case of the treatment method shown in Fig. 1, these iron hydroxide, calcium fluoride, and aluminum hydroxide are separated from a liquid fraction by the downstream sludge separation means 165 and discharged as sludge.

Then, the liquid fraction obtained by the sludge separation means 165 is sent to the second iron coagulation means 166, and a calcium-containing alkaline agent is added thereto. This makes it possible to increase the pH of the liquid fraction to 8 or higher but 11 or lower so that Fe²⁺ ions form a hydroxide. The wastewater containing the hydroxide of Fe²⁺ is then sent to the second sludge separation means 167 such as a thickener and, as in the case of the sludge separation means 165, is treated by coagulative precipitation utilizing a difference in specific gravity. At this time, cyanides are precipitated as complexes or the like together with the hydroxide. As a result, the cyanides and the hydroxide are discharged as sludge so that a liquid fraction from which substances that need to be removed have been removed can be obtained. The treatment method shown in Fig. 4 makes it possible to complete the removal of cyano complexes by performing the selenium-fluorine removal step 6 even when the performance of the cyano complex removal step 5 to remove complexes is not satisfactory or the cyano complex removal step 5 is omitted.

When the second iron coagulation means 166 adds a calcium-containing alkaline agent, an alkali such as caustic soda may be added in combination with the calcium-containing alkaline agent. This makes it possible to easily increase the pH of the wastewater as well as to reduce the amount of the calcium-containing alkaline agent remaining as an unreacted solid so that the utilization ratio of the chemical agent is increased.

As described above, according to the treatment method shown in Fig. 4, coagulative precipitation and solid-liquid separation of dissolved iron are performed in two stages at different pHs. In the first stage, Fe³⁺ and Al are mainly treated by coagulative precipitation and solid-liquid separation, and in the second stage, Fe²⁺ is mainly treated by coagulative precipitation and solid-liquid separation. During the coagulative precipitation and solid-liquid separation in the second stage, some of cyanides can be precipitated as complexes together with a hydroxide of Fe²⁺. In the first stage, complexes of cyanides with a hydroxide of Fe³⁺ have relatively high solubility, and therefore a high cyanide removal ratio is less likely to be achieved. As a result, the sludge generated in the first stage is smaller in a cyanide content than the sludge generated in the second stage, which makes it easy to dispose of the sludge generated in the first stage.

At least a part of the wastewater that has been treated in the selenium-fluorine removal step 6 is then sent to the reverse osmosis membrane treatment step 7. More specifically, the wastewater is subjected to membrane treatment, performed by a reverse osmosis membrane treatment means 71, by the application of a pressure of about 500 to 1000 kPa higher than its osmotic pressure so that low-molecular inorganic salts originally contained in raw wastewater and NH₃ and nitric acid generated by the advanced oxidation means 41 are separated to obtain a clear permeate. The permeate may be directly released or reused as industrial water in a plant.

On the other hand, retentate can be effectively treated by recycling it to the upstream side of the biological treatment step 3. When the total amount of the wastewater is treated in the reverse osmosis membrane treatment step 7, Na and Cl are accumulated in the system. Therefore, in this case, it is preferred that a part of the retentate is extracted to the outside of the system and diluted with the permeate before its release. The retentate concentrated about 2- to 10-fold in the reverse osmosis membrane treatment means 71 can be treated by the treatment method shown in Fig. 3 or 4 to remove nitrogen-containing substances or persistent substances. For example, persistent substances can be treated in the same manner as the heating means 411 to the addition means 413 in the decomposition treatment step 4. On the other hand, nitrogen-containing substances can be treated by using, for example, the ammonia removal means 415 and the nitric acid removal means 416.

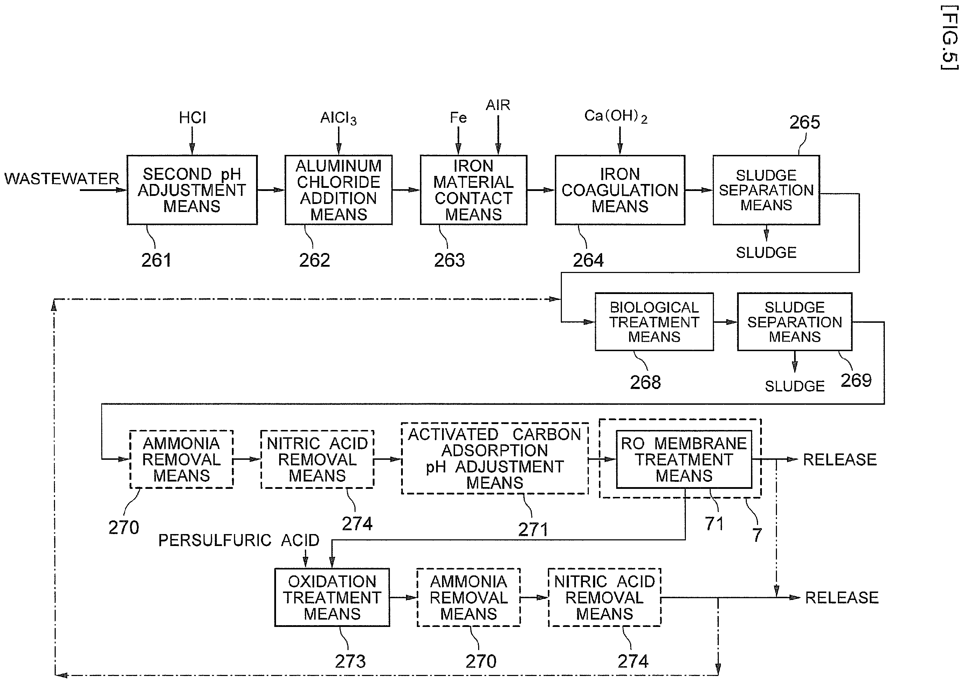

Hereinbelow, another specific example of the selenium-fluorine removal step 6 will be described with reference to Fig. 5. In Fig. 5, the reverse osmosis membrane treatment step 7 is also shown in addition to the selenium-fluorine removal step 6. The treatment method shown in Fig. 5 is suitable when raw wastewater contains, in addition to selenides, fluorides, borides, cyanides, and organic substances, nitrogen-containing water-soluble compounds and/or persistent substances. Examples of the nitrogen-containing water-soluble compounds include thiocyanates (SCN), cyanides (CN), and NH₃ and ammonium compounds.

More specifically, the wastewater is treated by a second pH adjustment means 261 to a sludge separation means 265 as in the case of the treatment method shown in Fig. 1. Then, the wastewater is treated by a biological treatment means 268 to remove organic substances and is then sent to a sludge separation means 269 provided downstream of the biological treatment means 268 so that sludge is discharged to obtain a liquid fraction from which substances that need to be removed have been removed. The sludge discharged from the sludge separation means 269 can be returned to the upstream sludge separation means 265. The obtained liquid fraction is treated by an ammonia removal means 270, a nitric acid removal means 274, and an activated carbon adsorption-pH adjustment means 271, if necessary, and is then sent to the reverse osmosis membrane treatment means 71 of the reverse osmosis membrane treatment step 7 and separated into permeate and retentate.

The obtained permeate is released or reused, and the retentate is sent to an oxidation treatment means 273 and further oxidatively treated. If necessary, the retentate oxidatively treated by the oxidation treatment means 273 is sent to the ammonia removal means 270 to remove ammonia and is then further sent to the nitric acid removal means 274 to remove nitric acid before its release. It is to be noted that the positions in which the ammonia removal means 270 and the nitric acid removal means 274 are provided if necessary are not limited to between the sludge separation means 269 and the reverse osmosis membrane treatment step 7, and they may be provided downstream of the oxidation treatment means 273 or both between the sludge separation means 269 and the reverse osmosis membrane treatment step 7 and downstream of the oxidation treatment means 273. The necessity for providing the ammonia removal means 270 and the nitric acid removal means 274 depends on the concentration of ammonia or nitrogen-containing compounds in raw wastewater, the characteristics of oxidation treatment (decomposition products produced by oxidation treatment), and membrane separation properties, and only one of ammonia and nitric acid may be removed.

According to the treatment method shown in Fig. 5, the operation of precipitating divalent iron at a high pH is not performed when selenides, fluorides, and borides are removed, and therefore cyanides can be complexed with iron without transferring into sludge. This makes it possible to suppress the growth inhibition activity of cyanides. Further, when the sludge discharged from the sludge separation means 269 is returned to the upstream side of the upstream sludge separation means 265, the wastewater in the sludge separation means 265 can be brought into contact with the excess sludge generated by treatment of organic substances. It is expected that this reduces the growth inhibition activity of cyanides, such as free cyanides, remaining in the wastewater. Therefore, even when the wastewater contains cyanides, biological treatment can be stably performed while its speed is reduced.

Further, the sludge returned to the upstream side of the sludge separation means 265 is brought into contact with the wastewater in the sludge separation means 265 in a short period of time, and is then quickly subjected to solid-liquid separation. At this time, the concentrations of selenides, fluorides, borides, and cyanides can be reduced because some of these substances are adsorbed by contact between the sludge and hydroxide sludge. Further, microorganisms are acclimatized to cyanides having inhibitory effect by increasing the number of contacts with cyanides, and therefore biological treatment can be more stably performed. Further, the hydroxide sludge and the sludge are mixed together, and therefore solid-liquid separation (sedimentation) properties can be improved as compared to when only the sludge is subjected to solid-liquid separation. It is to be noted that a biological treatment method to be used is not particularly limited, and either one or a combination of aerobic treatment and anaerobic treatment may be performed. The biological treatment process and the sludge separation process may be combined into one process using a membrane.

It is to be noted that the wastewater that has been treated by the second sludge separation means 167 according to the method shown in Fig. 4 may be treated by the biological treatment means 268 and the sludge separation means 268. In this case, some of cyanides are removed and therefore biological treatment can be more stably performed. Further, sludge obtained by the sludge separation means 269 is preferably returned not to the second sludge separation means 167 but to the sludge separation means 165.

According to the method shown in Fig. 5, permeate that can be directly released or reused can be obtained by the reverse osmosis membrane treatment means 71, and the amount of wastewater that needs to be further treated can be reduced by concentrating, in the retentate of the reverse osmosis membrane treatment means 71, substances that need to be removed and that are dissolved in a liquid fraction obtained by the sludge separation means 269. This makes it possible to reduce the amount of liquid to be treated by the oxidation treatment means 273 and by, for example, the ammonia removal means 270 and the nitric acid removal means 274 that are provided downstream of the oxidation treatment means 273 if necessary, thereby making it possible to reduce the capacities and sizes of towers or tanks and pipes required for a step using these means.

Further, concentration of substances that need to be removed makes it possible, when treatment involving a reaction is performed in a downstream treatment step, to more efficiently perform the reaction and therefore to achieve predetermined removal ratio in a short reaction time. As described above, concentration of substances that need to be removed in the retentate of the reverse osmosis membrane makes it possible to simply and efficiently perform subsequent treatment. It is to be noted that the wastewater having concentrated substances that need to be removed can flexibly meet effluent standards by subsequently treating the wastewater and appropriately mixed with the permeate again.

The oxidation treatment means 273 treats persistent substances measured as COD, such as polythionates, thiosulfates, and cyanides, or ammonia or nitric acid sometimes originally contained in raw wastewater or generated by decomposition of persistent substances. Specific examples of a treatment method include: an advanced oxidation method in which active oxygen such as OH radicals is generated by adding an oxidizing agent at a temperature of about room temperature and introducing optical energy so that oxidation treatment is performed by the strong oxidative power of active oxygen; and the above-described advanced oxidation method using persulfuric acid.

Alternatively, a catalytic oxidation method may be used, in which oxidation treatment is performed by introduction of an oxidizing agent such as air and by contact with a catalyst at a temperature of about 100 to 250°C. The catalyst used in this case may be, for example, a noble metal such as platinum. When persistent substances are forcefully decomposed by any method, ammonia or nitric acid is produced as a by-product from some of cyanides and thiocyanates depending on the method used. Therefore, ammonia or nitric acid needs to be removed depending on the degree of dilution with membrane permeate, the amount of liquid circulated, and effluent limits. In this case, the ammonia removal means 270 and/or the nitric acid removal means 274 are provided downstream of the oxidation treatment. This makes it possible to reliably remove substances subject to control.

When raw wastewater contains high levels of NH₃ and ammonium compounds as nitrogen-containing compounds, if necessary, the ammonia removal means 270 is preferably further provided in another position in addition to the above-described position between the sludge separation means 269 and the reverse osmosis membrane treatment means 71 and the above-described position downstream of the oxidation treatment means 273. This is because the NH₃ permeation ratio of the reverse osmosis membrane is relatively high, and therefore when raw wastewater contains a high level of NH₃, part of NH₃ is contained in the permeate of the reverse osmosis membrane and the permeate cannot be directly released depending on the level of NH₃ contained in the permeate.

In this case, the ammonia removal means 270 is provided upstream of the reverse osmosis membrane treatment means 71 or downstream of the reverse osmosis membrane treatment means 71 to treat permeate before the permeate is released or reused. However, when NH₃ is removed by stripping, as shown in Fig. 5, the ammonia removal means 270 is preferably provided between the sludge separation means 269 and the reverse osmosis membrane treatment means 71. This is because when NH₃ is removed by stripping, the temperature of the wastewater is set to a high value, and therefore microorganisms contained in sludge remaining in the wastewater are killed. This makes it possible to prevent the growth of microorganisms on the reverse osmosis membrane provided downstream of the ammonia removal means 270, which makes it easy to perform membrane screening. Further, it is also possible to reduce the viscosity of the wastewater and therefore to increase the flux of the membrane, which makes it possible to increase the amount of permeate.

When raw wastewater contains persistent substances such as polythionates and thiosulfates or persulfuric acid is used as an oxidizing agent, sulfates are generated after treatment by the oxidation treatment means 273. Further, there is a case where sulfates are generated by alkali addition performed upstream. Further, acids and/or alkalis such as NaOH used to pH adjustment are contained in the wastewater. These sulfates and sodium are not subject to control, and therefore unlike NH₃, do not need to be removed by aftertreatment. However, they are accumulated in retentate by discharging only membrane permeate generated in the reverse osmosis membrane treatment step to the outside of the system, which gradually degrades treatment performance. In order to avoid this, retentate needs to be appropriately treated and discharged to the outside of the system.

The wastewater that has been treated by the oxidation treatment means 273 may be returned to the biological treatment means 268 as indicated by alternate long and short dashed lines in Fig. 5. By returning the wastewater, ammonia or nitric acid generated by oxidation treatment can be decomposed by biological treatment. Further, when degradation of treatment performance occurs in any of the steps for any reason, operation for ensuring the treatment performance of the entire wastewater treatment system can be performed by such liquid circulation. However, the wastewater retuned to the biological treatment means 268 sometimes contains chloride ions, sulfate ions, nitrate ions, etc., and these ions are considered to be gradually accumulated in the system. Therefore, as in the case of the above-described sulfates, these ions need to be discharged to the outside of the system, if necessary. When these ions are discharged to the outside of the system, as indicated by a chain double-dashed line in Fig. 5, the wastewater that has been treated by the oxidation treatment means 273 is preferably released after diluted with permeate generated by the reverse osmosis membrane treatment means 71 to meet effluent limits and subjected to pH adjustment.

When the wastewater that has been treated by the oxidation treatment means 273 is diluted with permeate before its release, it is preferred that the dilution ratio of the wastewater can be appropriately adjusted. This makes it possible to meet effluent limits even when the treatment performance of a retentate treatment step performed after the reverse osmosis membrane treatment step 7 is temporarily degraded. That is, the wastewater to be released can meet effluent limits while the amount of the reusable permeate can be maximized by sampling the wastewater before release and by adjusting the dilution ratio with permeate depending on the concentrations of substances that are subject to control and are contained in the sample.

The activated carbon adsorption means of the activated carbon adsorption-pH adjustment means 271 is intended to adsorb and remove mainly organic substances contained in the wastewater using activated carbon by, for example, introducing the wastewater into a fixed bed filled with activated carbon. The activated carbon to be used is not particularly limited, but is preferably one that can adsorb substances, such as organic substances, causing membrane fouling. On the other hand, the pH adjustment step is not particularly limited as long as the pH of the wastewater can be adjusted to a value within a pH range required for a downstream treatment step. Examples of a chemical agent used for pH adjustment include acids such as sulfuric acid and hydrochloric acid and alkalis such as caustic soda and calcium hydroxide.

Although the wastewater treatment method according to the present invention has been described above with reference to one specific example and modifications thereof, the present invention is not limited to these specific example and modifications and various alternatives and modifications may be made without departing from the scope of the present invention. It should be noted that the technical scope of the present invention is defined by the appended claims and equivalents thereto. This application is based on Japanese Patent Application Nos. 2010-073412, 2010-226072, and 2010-226082, the contents of which are incorporated herein by reference.

### EXAMPLES

### Example 1

Simulated wastewater was prepared by dissolving reagents in pure water so that the concentration of sodium cyanide was 50 mg/L (as CN), the concentration of potassium ferrocyanide was 5 mg/L (as CN), the concentration of sodium formate was 500 mg/L (as formate), and the concentration of sodium thiosulfate was 100 mg/L (as S₂O₃). This simulated wastewater was adjusted to pH 4.5 with dilute hydrochloric acid and a temperature of 40°C, and was then aerated with air at 0.1 L/min per liter of simulated wastewater for about 30 minutes. Exhaust air was released into a laboratory drafter after bubbling through a 1 mol/L aqueous NaOH solution. After the aeration treatment, the total cyanide concentration (according to JIS K-0102) of the thus obtained aerated wastewater was 8 mg/L, and cyanides were detected in the aqueous NaOH solution in which the exhaust gas was treated.

Then, the aerated wastewater was adjusted with dilute NaOH to pH 6.5, and was then transferred into an aerobic treatment tank with a capacity of 2 L. Aerobic activated sludge was added to the aerobic treatment tank, and the aerated wastewater was subjected to aerobic treatment by introducing air. As a result, the formate could be smoothly biologically treated so that the concentration of formate was reduced to 50 mg/L. Then, the biologically-treated wastewater was mixed with the aqueous NaOH solution in which cyanides had been detected. The mixture was heated to 85°C, and then persulfuric acid was added to achieve a concentration of 1000 mg/L (as S₂O₃) to perform decomposition treatment (advanced oxidation treatment) for 60 minutes. As a result, the cyanides, the formate, and the thiosulfate were decomposed and removed so that the concentration of total cyanide was reduced to 4 mg/L or lower, the concentration of formate was reduced to 10 mg/L or lower, and the concentration of thiosulfate was reduced to 10 mg/L or lower.

### Example 2

Simulated wastewater was prepared in the same manner as in Example 1 except that sodium fluoride and sodium thiocyanate were further dissolved to achieve a concentration of 200 mg/L (as F) and 50 mg/L (as SCN), respectively. The simulated wastewater was aerated with air under the same conditions as in Example 1, and then Ca(OH)₂ was added to the thus obtained aerated wastewater to adjust its pH to 8 and ferrous sulfate was also added to achieve a concentration of 120 mg/L (as Fe). Then, the wastewater and the reagents were mixed under stirring for 15 minutes while air was introduced into the wastewater. As a result, a slurry liquid containing solid CaF₂ was obtained.

The thus obtained slurry liquid was biologically treated under the same conditions as in Example 1. As a result, the formate could be smoothly biologically treated so that the concentration of formate was reduced to 55 mg/L or lower. Then, as in the case of Example 1, the biologically-treated liquid was mixed with the aqueous NaOH solution, and the mixture was subjected to advanced oxidation treatment using persulfuric acid under the same conditions as in Example 1 except that the amount of persulfuric acid added was changed from 1000 mg/L to 1800 mg/L (as S₂O₃). As a result, the decomposition ratio of thiocyanate was 80% or higher, the removal ratio of fluorine was 90% or higher, and the decomposition removal ratio of other substances were the same as those in Example 1.

### REFERENCE NUMERALS LIST

- 1: ammonia removal step
- 2: free cyanide removal step
- 3: biological treatment step
- 4: decomposition treatment step
- 5: residual cyano complex removal step
- 6: selenium-fluorine removal step
- 7: reverse osmosis membrane treatment step

## Claims

1. A method for treating wastewater discharged by wet-cleaning of gas obtained by partial oxidation of fossil fuel, the method comprising:
a free cyanide removal step (2) in which free cyanides contained in the wastewater are removed:
- first by acidifying the wastewater, in a first pH adjustment means (21), with sulfuric acid or hydrochloric acid, to adjust its pH 3 to 7, and
- then by sending the wastewater whose pH has been adjusted to aeration means (22), where the wastewater is aerated;
a biological treatment step (3) in which the wastewater that has been treated in the free cyanide removal step (2) is biologically treated; and
an advanced oxidation treatment step (4) in which COD components contained in the wastewater that has been biologically treated are subject to advanced oxidation treatment,
wherein the free cyanides removed in the free cyanide removal step (2) are collected in an alkaline solution, and then the alkaline solution including the free cyanide is sent to the advanced oxidation treatment step (4) where the alkaline solution including the free cyanide is subject to advanced oxidation treatment together with the biologically-treated wastewater.

2. The wastewater treatment method according to claim 1, further comprising, between the free cyanide removal step (2) and the biological treatment step (3), at least one of
a step in which fluorides possibly contained in the wastewater is fixed as calcium fluoride by adding at least one of calcium hydroxide, calcium carbonate, and calcium chloride to the wastewater and
a step in which thiocyanates possibly contained in the wastewater is complexed by adding divalent iron ions and/or trivalent iron ions to the wastewater.

3. The wastewater treatment method according to claim 1 or 2, further comprising a step in which ammonia or ammonium compounds possibly contained in the wastewater is removed by biological treatment or non-biological treatment and/or a step in which nitrates possibly contained in the wastewater is removed by biological treatment or non-biological treatment.

4. The wastewater treatment method according to any one of claims 1 to 3, further comprising a step using a second pH adjustment means (61) in which the wastewater that has been treated in the advanced oxidation treatment step (4) is adjusted to pH 3 or higher but pH 7 or lower by adding an inorganic acid and/or an inorganic alkaline agent to the wastewater to remove fluorides such as fluoro complexes, selenides, and cyano complexes possibly contained in the wastewater; a step using aluminum addition means (62) in which an aluminum compound is added to the wastewater at the same time as or after pH adjustment performed by the second pH adjustment means (61); a step using iron material contact means (63) in which iron is dissolved in the wastewater by bringing an iron material into contact with the wastewater while introducing oxygen-containing gas into the wastewater; a step using iron coagulation means (64) in which solid matter is coagulated by adding a calcium-containing alkaline agent to the wastewater that has been treated by the iron material contact means (63) in such a manner that a pH of the wastewater becomes 6 or higher but 9 or lower and exceeds that of the wastewater in the iron material contact means (63); and a step using sludge separation means (65) in which the solid matter is separated from the wastewater.

5. The wastewater treatment method according to claim 4, wherein the iron material contact means (63) controls an amount of the gas introduced into the wastewater, and the wastewater treatment method further comprising, downstream of the sludge separation means (65), a step using second iron coagulation means (166) in which solid matter is coagulated by adding an alkaline agent to the wastewater in such a manner that a pH of the wastewater becomes 8 or higher but 11 or lower and exceeds that of the wastewater in the iron coagulation means (64); and a step using second sludge separation means (167) in which the solid matter obtained by the second iron coagulation means (166) is separated from the wastewater.

6. The wastewater treatment method according to any one of claims 1 to 5, further comprising
a step (7) in which at least part of the wastewater that has been treated in the advanced oxidation treatment step (4) is treated by using a reverse osmosis membrane to obtain retentate, and
a step in which the retentate is recycled to an upstream side of the biological treatment step.

7. The wastewater treatment method according to any one of claims 1 to 5, further comprising
a step (7) in which at least part of the wastewater that has been treated in the advanced oxidation treatment step (4) is treated by using a reverse osmosis membrane to obtain retentate, and
a step in which nitrogen-containing substances and/or persistent substances possibly contained in the retentate is removed.

8. The wastewater treatment method according to claim 7, wherein the step of removing nitrogen-containing substances and/or persistent substances is an advanced oxidation treatment step.

9. The wastewater treatment method according to claim 8, wherein the advanced oxidation treatment step mentioned in claim 1 or 8 is a step in which persistent substances possibly contained in a liquid to be treated are oxidatively decomposed by heating the liquid to be treated to 50 to 200°C and adding at least one of persulfuric acid and a persulfate to the liquid to be treated.

10. The wastewater treatment method according to claim 9, wherein the liquid to be treated is adjusted to pH 6 to 9 when the liquid is subjected to the advanced oxidation decomposition by adding at least one of persulfuric acid and a persulfate.

11. The wastewater treatment method according to claim 9 or 10, wherein after the advanced oxidation treatment step or when at least one of persulfuric acid and a persulfate is added, a calcium-based alkaline agent is added to crystallize calcium sulfate.

12. The wastewater treatment method according to any one of claims 9 to 11, wherein the wastewater that has been treated in the advanced oxidation treatment step is adjusted to pH 2 to 6 and is further subjected to activated carbon treatment to catalytically decompose persulfuric acid remaining in the wastewater.

13. A system for treating wastewater discharged by wet-cleaning of gas obtained by partial oxidation of fossil fuel, the system comprising:
free cyanide removal means in which free cyanides contained in the wastewater are removed, wherein the free cyanide removal means comprises:
a first pH adjustment means (21) in which the wastewater is acidified with sulfuric acid or hydrochloric acid to adjust its pH 3 to 7,
an aeration means (22) in which the waste water whose pH has been adjusted is aerated to remove free cyanides from the waste water, and
a cyanide gas cooling means (23) in which the free cyanides removed in the aeration means are collected in an alkaline solution;
biological treatment means (32) in which the wastewater that has been treated in the free cyanide removal means is biologically treated; and
advanced oxidation treatment means (41) in which COD components contained in the wastewater that has been biologically treated in the biological treatment means (32) are subject to advanced oxidation treatment together with the alkaline solution including the free cyanide obtained in the cyanide gas cooling means (23).

## Patentansprüche

1. Verfahren zum Behandeln von Abwasser, das durch Nassreinigung von durch partielle Oxidation von fossilem Brennstoff erhaltenem Gas abgeführt wird, wobei das Verfahren umfasst:
einen Schritt (2) zum Entfernen freien Cyanids, in dem in dem Abwasser enthaltene freie Cyanide entfernt werden:
- zunächst durch Ansäuern des Abwassers in einem ersten pH-Einstellmittel (21) mit Schwefelsäure oder Salzsäure, um dessen pH auf 3 bis 7 einzustellen, und
- dann durch Leiten des Abwassers, dessen pH eingestellt wurde, zu einem Belüftungsmittel (22), wo das Abwasser belüftet wird;
einen biologischen Behandlungsschritt (3), in dem das Abwasser, das in dem Schritt (2) zum Entfernen freien Cyanids behandelt wurde, biologisch behandelt wird; und
einen erweiterten Oxidationsbehandlungsschritt (4), in dem CSB-Bestandteile, die in dem Abwasser, das biologisch behandelt wurde, enthalten sind, einer erweiterten Oxidationsbehandlung unterzogen werden,
wobei die in dem Schritt (2) zum Entfernen freien Cyanids entfernten freien Cyanide in einer alkalischen Lösung gesammelt werden, und dann die alkalische Lösung, einschließlich des freien Cyanids, zu dem erweiterten Oxidationsbehandlungsschritt (4) geleitet wird, in dem die alkalische Lösung, einschließlich des freien Cyanids, zusammen mit dem biologisch behandelten Abwasser einer erweiterten Oxidationsbehandlung unterzogen wird.

2. Verfahren zum Behandeln von Abwasser nach Anspruch 1, weiter umfassend zwischen dem Schritt zum Entfernen freien Cyanids (2) und dem biologischen Behandlungsschritt (3) mindestens einen von
einem Schritt, in dem gegebenenfalls in dem Abwasser enthaltene Fluoride durch Zugeben mindestens eines von Calciumhydroxid, Calciumcarbonat und Calciumchlorid zu dem Abwasser als Calciumfluorid fixiert werden, und
einem Schritt, in dem gegebenenfalls in dem Abwasser enthaltene Thiocyanate durch Zugeben von zweiwertigen Eisenionen und/oder dreiwertigen Eisenionen zu dem Abwasser komplexiert werden.

3. Verfahren zum Behandeln von Abwasser nach Anspruch 1 oder 2, weiter umfassend einen Schritt, in dem gegebenenfalls in dem Abwasser enthaltenes Ammoniak oder Ammoniumverbindungen durch biologische Behandlung oder nicht-biologische Behandlung entfernt werden, und/oder einen Schritt, in dem gegebenenfalls in dem Abwasser enthaltene Nitrate durch biologische Behandlung oder nicht-biologische Behandlung entfernt werden.

4. Verfahren zum Behandeln von Abwasser nach einem der Ansprüche 1 bis 3, weiter umfassend
einen ein zweites pH-Einstellmittel (61) verwendenden Schritt, in dem das in dem erweiterten Oxidationsbehandlungsschritt (4) behandelte Abwasser durch Zugeben einer anorganischen Säure und/oder eines anorganischen alkalischen Mittels zu dem Abwasser auf pH 3 oder höher, aber pH 7 oder niedriger eingestellt wird, um gegebenenfalls in dem Abwasser enthaltene Fluoride, wie Fluorkomplexe, Selenide und Cyanokomplexe zu entfernen;
einen ein Aluminium-Zugabemittel (62) verwendenden Schritt, in dem gleichzeitig mit dem oder nach dem mittels des zweiten pH-Einstellmittels (61) ausgeführten pH-Einstellen dem Abwasser eine Aluminiumverbindung zugegeben wird;
einen ein Eisenmaterial-Kontaktmittel (63) verwendenden Schritt, in dem Eisen in dem Abwasser gelöst wird, indem ein Eisenmaterial mit dem Abwasser in Kontakt gebracht wird, während sauerstoffhaltiges Gas in das Abwasser eingeleitet wird;
einen ein Eisenfällungsmittel (64) verwendenden Schritt, in dem Feststoff durch Zugeben eines calciumhaltigen alkalischen Mittels zu dem durch das Eisenmaterial-Kontaktmittel (63) behandelten Abwasser derart koaguliert wird, dass ein pH des Abwassers 6 oder höher, aber 9 oder niedriger wird und den des Abwassers in dem Eisenmaterial-Kontaktmittel (63) übersteigt; und
einen ein Schlammabscheidungsmittel (65) verwendenden Schritt, in dem der Feststoff von dem Abwasser abgeschieden wird.

5. Verfahren zum Behandeln von Abwasser nach Anspruch 4, wobei das Eisenmaterial-Kontaktmittel (63) eine Menge des in das Abwasser eingeleiteten Gases steuert, und wobei das Verfahren zum Behandeln von Abwasser dem Schlammabscheidungsmittel nachgeschaltet (65) weiter umfasst:
einen ein zweites Eisenkoagulationsmittel (166) verwendenden Schritt, in dem Feststoff durch Zugeben eines alkalischen Mittels zu dem Abwasser derart koaguliert wird, dass ein pH des Abwassers 8 oder höher, aber 11 oder niedriger wird und den des Abwassers in dem Eisenkoagulationsmittel (64) übersteigt; und
einen ein zweites Schlammabscheidungsmittel (167) verwendenden Schritt, in dem der durch das zweite Eisenfällungsmittel (166) erhaltene Feststoff von dem Abwasser abgeschieden wird.

6. Verfahren zum Behandeln von Abwasser nach einem der Ansprüche 1 bis 5, weiter umfassend
einen Schritt (7), in dem mindestens ein Teil des Abwassers, das in dem erweiterten Oxidationsbehandlungsschritt (4) behandelt wurde, durch Verwenden einer Umkehrosmosemembran behandelt wird, um Retentat zu erhalten, und
einen Schritt, in dem das Retentat zu einer vorgeschalteten Seite des biologischen Behandlungsschritts zurückgeführt wird.

7. Verfahren zum Behandeln von Abwasser nach einem der Ansprüche 1 bis 5, weiter umfassend
einen Schritt (7), in dem mindestens ein Teil des Abwassers, das in dem erweiterten Oxidationsbehandlungsschritt (4) behandelt wurde, durch Verwenden einer Umkehrosmosemembran behandelt wird, um Retentat zu erhalten, und
einen Schritt, in dem stickstoffhaltige Substanzen und/oder schwer abbaubare Substanzen, die gegebenenfalls in dem Retentat enthalten sind, entfernt werden.

8. Verfahren zum Behandeln von Abwasser nach Anspruch 7, wobei der Schritt des Entfernens stickstoffhaltiger Substanzen und/oder schwer abbaubarer Substanzen ein erweiterter Oxidationsbehandlungsschritt ist.

9. Verfahren zum Behandeln von Abwasser nach Anspruch 8, wobei der in Anspruch 1 oder 8 genannte erweiterte Oxidationsbehandlungsschritt ein Schritt ist, in dem schwer abbaubare Substanzen, die gegebenenfalls in einer zu behandelnden Flüssigkeit enthalten sind, durch Erhitzen der zu behandelnden Flüssigkeit auf 50°C bis 200°C und Zugeben mindestens eines von Perschwefelsäure und einem Persulfat zu der zu behandelnden Flüssigkeit oxidativ zersetzt werden.

10. Verfahren zum Behandeln von Abwasser nach Anspruch 9, wobei die zu behandelnde Flüssigkeit auf pH 6 bis 9 eingestellt wird, wenn die Flüssigkeit durch Zugeben mindestens eines von Perschwefelsäure und einem Persulfat der erweiterten Oxidationszersetzung unterzogen wird.

11. Verfahren zum Behandeln von Abwasser nach Anspruch 9 oder 10, wobei nach dem erweiterten Oxidationsbehandlungsschritt oder wenn mindestens eines von Perschwefelsäure und einem Persulfat zugegeben wird, ein Calcium-basiertes alkalisches Mittel zugegeben wird, um Calciumsulfat zu kristallisieren.

12. Verfahren zum Behandeln von Abwasser nach einem der Ansprüche 9 bis 11, wobei das in dem erweiterten Oxidationsbehandlungsschritt behandelte Abwasser auf pH 2 bis 6 eingestellt wird und weiterführend einer Aktivkohlebehandlung unterzogen wird, um in dem Abwasser verbleibende Perschwefelsäure katalytisch zu zersetzen.

13. System zum Behandeln von Abwasser, das durch Nassreinigung von durch partielle Oxidation von fossilem Brennstoff erhaltenem Gas abgeführt wird, wobei das System umfasst:
Mittel zum Entfernen freien Cyanids, in dem in dem Abwasser enthaltene freie Cyanide entfernt werden, wobei das Mittel zum Entfernen freien Cyanids umfasst:
ein erstes pH-Einstellmittel (21), in dem das Abwasser mit Schwefelsäure oder Salzsäure angesäuert wird, um dessen pH auf 3 bis 7 einzustellen,
ein Belüftungsmittel (22), in dem das Abwasser, dessen pH eingestellt wurde, belüftet wird, um freie Cyanide aus dem Abwasser zu entfernen, und
ein Cyanidgas-Kühlmittel (23), in dem die in dem Belüftungsmittel entfernten freien Cyanide in einer alkalischen Lösung gesammelt werden;
biologisches Behandlungsmittel (32), in dem das in dem Mittel zum Entfernen freien Cyanids behandelte Abwasser biologisch behandelt wird; und
erweitertes Oxidationsbehandlungsmittel (41), in dem CSB-Bestandteile, die in dem Abwasser enthalten sind, das in dem biologischen Behandlungsmittel (32) biologisch behandelt wurde, zusammen mit der alkalischen Lösung, einschließlich des in dem Cyanidgas-Kühlmittel (23) erhaltenen freien Cyanids, einer erweiterten Oxidationsbehandlung unterzogen werden.

## Revendications

1. Procédé de traitement des eaux usées déchargées par épuration par voie humide du gaz obtenu par oxydation partielle de combustibles fossiles, le procédé comprenant :
une étape d'élimination des cyanures libres (2) dans laquelle les cyanures libres contenus dans les eaux usées sont éliminés :
- d'abord par acidification des eaux usées, dans un premier moyen d'ajustement du pH (21), avec de l'acide sulfurique ou de l'acide chlorhydrique, pour les ajuster à pH 3 à 7, et
- ensuite par envoi des eaux usées dont le pH a été ajusté à un moyen d'aération (22), dans lequel les eaux usées sont aérées ;
une étape de traitement biologique (3) dans laquelle les eaux usées qui ont été traitées dans l'étape d'élimination des cyanures libres (2) sont traitées biologiquement ; et
une étape de traitement d'oxydation avancée (4) dans laquelle les composants DCO contenus dans les eaux usées qui ont été biologiquement traitées sont soumis à un traitement d'oxydation avancée,
dans lequel les cyanures libres éliminés à l'étape d'élimination des cyanures libres (2) sont collectés dans une solution alcaline, puis la solution alcaline comprenant le cyanure libre est envoyée à l'étape de traitement d'oxydation avancée (4) où la solution alcaline comprenant le cyanure libre est soumise à un traitement d'oxydation avancée conjointement aux eaux usées biologiquement traitées.

2. Procédé de traitement des eaux usées selon la revendication 1, comprenant en outre, entre l'étape d'élimination des cyanures libres (2) et l'étape de traitement biologique (3) au moins l'une de
une étape dans laquelle les fluorures éventuellement contenus dans les eaux usées sont fixés sous la forme de fluorure de calcium par ajout d'au moins l'un de l'hydroxyde de calcium, du carbonate de calcium, et du chlorure de calcium aux eaux usées, et
une étape dans laquelle les thiocyanates éventuellement contenus dans les eaux usées sont complexés par ajout d'ions fer divalents et/ou d'ions fer trivalents aux eaux usées.

3. Procédé de traitement des eaux usées selon la revendication 1 ou 2, comprenant en outre une étape dans laquelle les composés ammoniac ou ammonium éventuellement contenus dans les eaux usées sont éliminés par traitement biologique ou traitement non biologique et/ou une étape dans laquelle les nitrates éventuellement contenus dans les eaux usées sont éliminés par traitement biologique ou traitement non biologique.

4. Procédé de traitement des eaux usées selon l'une quelconque des revendications 1 à 3, comprenant en outre
une étape utilisant un second moyen d'ajustement du pH (61) dans laquelle les eaux usées qui ont été traitées dans l'étape de traitement d'oxydation avancée (4) sont ajustées à pH 3 ou plus mais à pH 7 ou moins par ajout d'un acide inorganique et/ou d'un agent alcalin inorganique aux eaux usées pour éliminer les fluorures tels que les complexes fluorés, les sélénides, et les complexes cyano éventuellement contenus dans les eaux usées ;
une étape utilisant un moyen d'ajout d'aluminium (62) dans laquelle un composé aluminium est ajouté aux eaux usées en même temps que, ou après, l'ajustement du pH réalisé par le second moyen d'ajustement du pH (61) ;
une étape utilisant un moyen de mise en contact avec un matériau de fer (63) dans lequel du fer est dissous dans les eaux usées par mise en contact d'un matériau de fer avec les eaux usées tout en introduisant du gaz contenant de l'oxygène dans les eaux usées ;
une étape utilisant un moyen de coagulation du fer (64) dans lequel la matière solide est coagulée par ajout d'un agent alcalin contenant du calcium aux eaux usées qui ont été traitées par le moyen de mise en contact avec un matériau de fer (63) de telle manière qu'un pH des eaux usées passe à 6 ou plus mais 9 ou moins et dépasse celui des eaux usées dans le moyen de mise en contact avec un matériau de fer (63) ; et
une étape utilisant un moyen de séparation des boues (65) dans laquelle la matière solide est séparée des eaux usées.

5. Procédé de traitement des eaux usées selon la revendication 4, dans lequel le moyen de mise en contact avec un matériau de fer (63) régule une quantité du gaz introduit dans les eaux usées, et le procédé de traitement des eaux usées comprend en outre, en aval du moyen de séparation des boues (65),
une étape utilisant un second moyen de coagulation du fer (166) dans laquelle la matière solide est coagulée par ajout d'un agent alcalin aux eaux usées de telle sorte qu'un pH des eaux usées passe à 8 ou plus mais 11 ou moins et dépasse celui des eaux usées dans le moyen de coagulation du fer (64) ; et
une étape utilisant un second moyen de séparation des boues (167) dans laquelle la matière solide obtenue par le second moyen de coagulation du fer (166) est séparée des eaux usées.

6. Procédé de traitement des eaux usées selon l'une quelconque des revendications 1 à 5, comprenant en outre
une étape (7) dans laquelle au moins une partie des eaux usées qui ont été traitées dans l'étape de traitement d'oxydation avancée (4) est traitée en utilisant une membrane d'osmose inverse pour obtenir un rétentat, et
une étape dans laquelle le rétentat est recyclé vers un côté amont de l'étape de traitement biologique.

7. Procédé de traitement des eaux usées selon l'une quelconque des revendications 1 à 5, comprenant en outre
une étape (7) dans laquelle au moins une partie des eaux usées qui ont été traitées dans l'étape de traitement d'oxydation avancée (4) est traitée en utilisant une membrane d'osmose inverse pour obtenir un rétentat, et
une étape dans laquelle les substances contenant de l'azote et/ou les substances persistantes éventuellement contenues dans le rétentat sont éliminées.

8. Procédé de traitement des eaux usées selon la revendication 7, dans lequel l'étape d'élimination des substances contenant de l'azote et/ou des substances persistantes est une étape de traitement d'oxydation avancée.

9. Procédé de traitement des eaux usées selon la revendication 8, dans lequel l'étape de traitement d'oxydation avancée mentionnée dans la revendication 1 ou 8 est une étape dans laquelle les substances persistantes éventuellement contenues dans un liquide à traiter sont décomposées par oxydation par chauffage du liquide à traiter à 50 à 200 °C et par ajout d'au moins l'un de l'acide persulfurique et d'un persulfate au liquide à traiter.

10. Procédé de traitement des eaux usées selon la revendication 9, dans lequel le liquide à traiter est ajusté à pH 6 à 9 lorsque le liquide est soumis à une décomposition par oxydation avancée par ajout d'au moins l'un de l'acide persulfurique et d'un persulfate.

11. Procédé de traitement des eaux usées selon la revendication 9 ou 10, dans lequel après l'étape de traitement d'oxydation avancée ou lorsqu'au moins l'un de l'acide persulfurique et d'un persulfate est ajouté, un agent alcalin à base de calcium est ajouté pour cristalliser le sulfate de calcium.

12. Procédé de traitement des eaux usées selon l'une quelconque des revendications 9 à 11, dans lequel les eaux usées qui ont été traitées dans l'étape de traitement d'oxydation avancée sont ajustées à pH 2 à 6 et sont en outre soumises à un traitement au charbon actif pour catalytiquement décomposer l'acide persulfurique restant dans les eaux usées.

13. Système de traitement des eaux usées déchargées par épuration par voie humide du gaz obtenu par oxydation partielle de carburants fossiles, le système comprenant :
un moyen d'élimination des cyanures libres dans lequel les cyanures libres contenus dans les eaux usées sont éliminés, dans lequel le moyen d'élimination des cyanures libres comprend :
un premier moyen d'ajustement du pH (21) dans lequel les eaux usées sont acidifiées avec de l'acide sulfurique ou de l'acide chlorhydrique pour les ajuster à pH 3 à 7,
un moyen d'aération (22) dans lequel les eaux usées dont le pH a été ajusté sont aérées pour éliminer les cyanures libres des eaux usées, et
un moyen de refroidissement gazeux des cyanures (23) dans lequel les cyanures libres éliminés dans le moyen d'aération sont collectés dans une solution alcaline ;
un moyen de traitement biologique (32) dans lequel les eaux usées qui ont été traitées dans le moyen d'élimination des cyanures libres sont biologiquement traitées ; et
un moyen de traitement d'oxydation avancée (41) dans lequel les composants COD contenus dans les eaux usées qui ont été biologiquement traitées dans le moyen de traitement biologique (32) sont soumis à un traitement d'oxydation avancée conjointement à la solution alcaline comprenant le cyanure libre obtenu dans le moyen de refroidissement gazeux de cyanure (23).
